# EUROPÄISCHE PATENTSCHRIFT

(11) **EP 2 521 861 B1**
(45) Veröffentlichungstag und Bekanntmachung des Hinweises auf die Patenterteilung: **27.05.2015**
(21) Anmeldenummer: 11704059.2
(22) Anmeldetag: 15.02.2011
(51) Int. Cl.: F03G 6/00, F03G 6/06

(54) **SOLARTHERMISCHES KRAFTWERK MIT INDIREKTER VERDAMPFUNG UND VERFAHREN ZUM BETRIEB EINES SOLCHEN SOLARTHERMISCHEN KRAFTWERKS**
SOLAR THERMAL POWER PLANT USING INDIRECT EVAPORATION AND METHOD FOR OPERATING SUCH A SOLAR THERMAL POWER PLANT
CENTRALE SOLAIRE THERMIQUE À ÉVAPORATION INDIRECTE ET PROCÉDÉ PERMETTANT DE FAIRE FONCTIONNER UNE TELLE CENTRALE SOLAIRE THERMIQUE

(30) Priorität: 30.03.2010 DE 102010013363
(43) Veröffentlichungstag der Anmeldung: 14.11.2012
(73) Patentinhaber: Siemens Aktiengesellschaft, 80333 München (DE)
(72) Erfinder: BIRNBAUM, Jürgen, 90419 Nürnberg (DE); FICHTNER, Markus, 91639 Wolframs-Eschenbach (DE)
(86) Internationale Anmeldenummer: PCT/EP2011/052164
(87) Internationale Veröffentlichungsnummer: WO 2011/124408

(56) Entgegenhaltungen:
- AT-B- 362 624
- FR-A1- 2 501 840
- US-A1- 2009 320 828

## Beschreibung

Die Erfindung betrifft ein solarthermisches Kraftwerk mit indirekter Verdampfung, das einen Primärkreis mit einem Wärmeträgermedium-Leitungssystem und mindestens einer solarthermischen Baugruppe zur Erhitzung des Wärmeträgermediums mittels Solarenergie, einen Wasserdampf-Sekundärkreis mit einem Dampfturbinensystem und einen mit dem Dampfturbinensystem gekoppelten Generator umfasst. Darüber hinaus betrifft die Erfindung ein Verfahren zum Betrieb eines solchen solarthermischen Kraftwerks mit indirekter Verdampfung.

Solarthermische Kraftwerke stellen eine Alternative zur herkömmlichen Stromerzeugung aus Wasserkraft, Windkraft, Kernkraft oder fossilen Brennstoffen dar. Sie nutzen solare Strahlungsenergie, um elektrische Energie zu erzeugen, und werden zum Beispiel mit Parabolrinnen-Kollektoren, Fresnel-Kollektoren oder Solar-Turmreceivern als solarthermische Baugruppe ausgeführt.

Solche Kraftwerke bestehen gewöhnlich entweder aus einem singulären Arbeitsfluid-Kreislaufsystem, in dem ein Arbeitsfluid in diesem Kreislauf direkt verdampft wird, oder aber aus einem ersten solaren Kraftwerksteil zur Absorption der Sonnenenergie und einem zweiten meist konventionellen Kraftwerksteil mit einem mittels eines Arbeitsfluides angetriebenen Dampfturbinensystem. Bei dem zweiten Kraftwerkstyp mit zwei getrennten Kreislaufsystemen spricht man von solarthermischen Kraftwerken mit indirekter Verdampfung, da die Sonnenenergie hier lediglich indirekt zur Verdampfung des Arbeitsfluides eingesetzt wird.

Ein herkömmliches solarthermisches Kraftwerk mit indirekter Verdampfung besteht grundsätzlich aus einer solarthermischen Baugruppe, wie zum Beispiel einem Solarfeld aus Parabolrinnenkollektoren, Fresnel-Kollektoren oder einem Turm-Receiver, in dem ein Wärmeträgermedium erhitzt wird, einer Wärmetauschergruppe in der die Wärmeenergie vom Wärmeträgermedium auf ein Arbeitsfluid im Dampfkreislauf, wie zum Beispiel, einem Wasserdampfkreislauf, übertragen wird, und optional aus einem thermischen Speicher. In der Wärmetauschergruppe wird die Wärmeenergie aus dem Primärkreis üblicherweise in drei Stufen aus Vorwärmer, Verdampfer und Überhitzer an das Arbeitsfluid im Dampfkreislauf abgegeben. Bei solarthermischen Kraftwerken mit indirekter Verdampfung werden als Wärmeträgermedium im Primärkreis bisher Thermoöle, Wasser, Luft oder Salzschmelzen (Molten Salt) eingesetzt, wobei als Arbeitsfluid des Sekundärkreises, dem Dampfkreislauf, meist Wasser zum Einsatz kommt.

Derzeit sind vor allem Parabolrinnenkraftwerke mit Thermoöl als Wärmeträgermedium, Fresnel-Kollektorsolarfelder mit Wasser als Wärmeträgermedium und Turm-Receiver-Kraftwerke mit Salzschmelzen, Luft oder Wasser als Wärmeträgermedium im Einsatz. Bei Thermoölanlagen sind Temperaturen von bis zu 390 °C und bei Salzschmelzen bis zu 550 °C sinnvoll handhabbar, wobei aber gerade bei Turm-Receivern und Luft als Wärmeträgermedium auch Temperaturen bis 1100 °C handhabbar sind.

Die Überhitzung des Arbeitsfluides im Dampfkreislauf dient bei den solarthermischen Kraftwerken zur Erhöhung des Anlagenwirkungsgrades und wird beim Betrieb von Dampfturbinen angewendet, um eine Schädigung der Turbinenschaufeln durch kondensierte Flüssigkeitstropfen, die nach der Dampferzeugungsstufe im Dampf verbleiben, zu vermeiden. Derzeit wird zur besseren Energieausnützung des erzeugten heißen Wärmeträgermediums bei solarthermischen Kraftwerken häufig mit einem mehrere Dampfturbinen umfassenden Dampfturbinensystem gearbeitet. Hierbei werden insbesondere bei Parabolrinnenkraftwerken mit Thermoöl als Wärmeträgermedium ein, zwei oder mehrere Zwischenüberhitzungsprozesse in das Dampfleitungssystem zwischen die Dampfturbinen mit eingebaut. Bei diesem Zwischenüberhitzungsprozess wird in der Überhitzungsstufe erzeugter Frischdampf über eine Hochdruckturbine geleitet. Vor Eintritt in die in Dampfrichtung nachgeschaltete Arbeitseinheit, wie z.B. eine Mitteldruck- oder Niederdruckturbine, wird der Dampf dann in einen Zwischenüberhitzer mit ein, zwei oder mehreren Wärmetauschern geleitet, wo er erneut durch heißes, vor der Überhitzungsstufe abgeleitetes Wärmeträgermedium überhitzt wird.

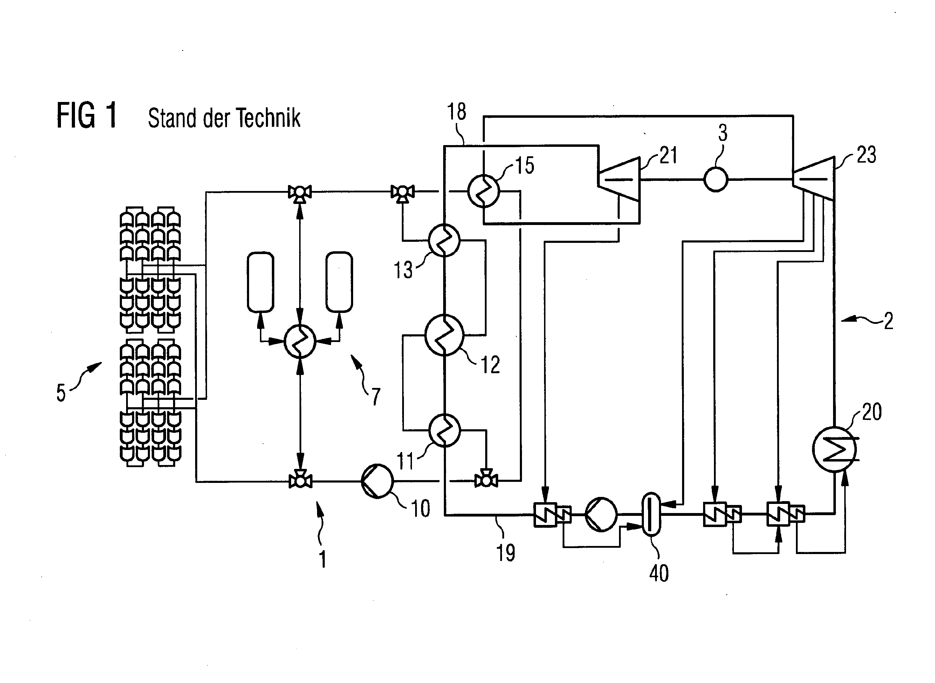

Die derzeit gängigste Art der Verschaltung der Wärmeüberträgermedien in einem solarthermischen Kraftwerk mit indirekter Verdampfung und einfacher Zwischenüberhitzung ist in Figur 1 dargestellt. Hier wird in der Wärmetauschergruppe das als Wärmeträgermedium eingesetzte Öl vom Solarfeldaustritt zuerst über den Überhitzer, dann über den Verdampfer und am Ende über den Vorwärmer des Sekundärkreises geleitet. Vor dem Überhitzer wird zusätzlich ein Teil des heißen Öles abgezweigt und über eine Zwischenüberhitzungsstufe geleitet.

Eine weitere Verschaltungsmöglichkeit ist es, die erste Zwischenüberhitzungsstufe in zwei Apparaten auszuführen oder den Dampf ein zweites Mal in einer zweiten Zwischenüberhitzungsstufe zwischen zu überhitzen. Mögliche Verschaltungsvarianten für solarthermische Kraftwerke mit indirekter Verdampfung und einfacher oder zweifacher Zwischenüberhitzung sind zum Beispiel in den Siemens-Patentanmeldungen WO 2009034577 A2 bzw. WO 2010054911 A1 dargestellt. Alle darin beschriebenen Verschaltungsvarianten werden unter Bezugnahme auf diese Patentschriften als grundlegende Verschaltungsvarianten für die vorliegende Erfindung hierin mit aufgenommen.

Die US 2008/0320828 offenbart die Merkmale des Oberbegriffs des Anspruchs 1.

Es ist eine Aufgabe der vorliegenden Erfindung, den Gesamtwirkungsgrad eines solarthermischen Kraftwerks mit indirekter Verdampfung sowie den eines Verfahrens zum Betrieb eines solarthermischen Kraftwerks der eingangs genannten Art zu verbessern.

Diese Aufgabe wird zum einen durch ein solarthermisches Kraftwerk mit indirekter Verdampfung nach Anspruch 1 und zum anderen durch ein Verfahren zum Betrieb eines solarthermischen Kraftwerks mit indirekter Verdampfung nach Anspruch 10 gelöst.

Ein solarthermisches Kraftwerk mit indirekter Verdampfung, wie es eingangs beschrieben wird, weist hierzu zumindest einen Primärkreis mit einem Wärmeträgermedium-Leitungssystem, einen Wasserdampf-Sekundärkreis mit einer Vorwärmstufe, einer Dampferzeugungsstufe, einer Dampfüberhitzungsstufe und einem Dampfturbinensystem und einen mit dem Dampfturbinensystem direkt oder indirekt gekoppelten Generator zur Erzeugung von elektrischer Leistung auf. Im Primärkreis wird zudem mindestens eine solarthermische Baugruppe benötigt, die im Betrieb zur Erhitzung des im Primärkreis geleiteten Wärmeträgermediums mittels Solarenergie dient.

Das erfindungsgemäße solarthermische Kraftwerk mit indirekter Verdampfung weist im Primärkreis eine Wärmetauschergruppe mit einem Wärmeträgermedium-Leitungssystem zur Übertragung der Wärmeenergie vom Wärmeträgermedium des Primärkreises auf die Dampfüberhitzungsstufe, die Dampferzeugungsstufe und die Vorwärmstufe des Wasserdampf-Sekundärkreises auf. Zur Erhöhung des Gesamtwirkungsgrades des Kraftwerks beinhaltet es eine optimierte Übertragung der Wärmeenergie vom Primärkreis (Solarfeldkreis) auf den Sekundärkreis (Wasserdampfkreis), indem das Wärmeträgermedium-Leitungssystem der Wärmetauschergruppe mindestens eine Bypass-Leitung um die Dampfüberhitzungsstufe und/oder die Dampferzeugungsstufe des Sekundärkreises aufweist. Unter Bypass ist gemäß der Erfindung ein Rohrleitungssystem zu verstehen, in dem ein Teilstrom des Wärmeträgermediums vor oder nach der Dampfüberhitzungsstufe aus dem Hauptmassenstrom des Wärmeträgermediums entnommen, um ein Bauteil bzw. eine Baugruppe bzw. eine Baustufe geleitet und vor der Vorwärmstufe wieder in den Hauptmassenstrom des Wärmeträgermediums eingeleitet wird. Das umströmte Bauteil bzw. die umströmte Baugruppe bzw. Baustufe ist dabei die Dampfüberhitzungsstufe (bzw. der Dampfüberhitzer) und/oder die Dampferzeugungsstufe (bzw. der Dampferzeuger). Unter die Definition Bypass fällt auch, wenn ein Bauteil bzw. eine Baugruppe bzw. eine Baustufe in diesem Bypass angeordnet ist, solange der Bypass nach dem jeweils umströmten Bauteil bzw. nach der jeweils umströmten Baugruppe bzw. Baustufe, aber auf jeden Fall vor der Vorwärmstufe wieder in den Hauptstrom des Wärmeträgermediums eingeleitet wird.

Diese Verschaltung ermöglicht gerade bei höheren Prozesstemperaturen im Primärkreis (Solarfeld-Kreis) bzw. Sekundärkreis (Wasserdampfkreis) ein deutliches Potential an einer Optimierung des Gesamtwirkungsgrades. Insbesondere ist zukünftig und in den hierin beschriebenen Kraftwerkstypen der Einsatz von Salzschmelzen (Molten Salt) oder anderen Wärmeträgermedien wie superkritischem CO₂, auf Schwefelverbindungen basierenden Wärmeträgermedien oder höhersiedenden Thermoölen als Wärmeträgermedium im Primärkreis eines solarthermischen Kraftwerks, insbesondere eines mit Parabolrinnen- oder Fresnel-Kollektoren, angedacht. Diese Wärmeträgermedien ermöglichen unter anderem höhere Prozesstemperaturen, aber können z.B. auch höhere Rücklauftemperaturen zu der solarthermischen Baugruppe (Solarfeld) im Primärkreis erfordern, da sie ansonsten beispielsweise auskristallisieren oder zu Verklumpungen führen. Eine recht kritische Stelle im Wärmetauscher ist hierbei die Vorwärmstufe, an der es mit Salzschmelzen in den bisherigen Verschaltungsvarianten wie zum Beispiel in der in Figur 1 gezeigten bekannten Verschaltungsvariante regelmäßig zu Verklumpungen durch auskristallisierende Wärmeträgermedien gekommen ist. Mit der erfindungsgemäßen Verschaltung des Primärkreises in der Wärmetauschergruppe kann die Rücklauftemperatur über die kritische Temperatur (Kristallisationstemperatur, Verklumpungstemperatur) angehoben oder eingestellt werden, so dass nunmehr auch Salzschmelzen in solchen Kraftwerkstypen handhabbar sind. Darüber hinaus sind höhere Prozesstemperaturen möglich und man gelangt zu einer Optimierung des Gesamtwirkungsgrades.

Der Wasserdampf-Sekundärkreis umfasst zur Erzeugung von überhitztem Dampf zumindest eine Vorwärmstufe zum Vorwärmen von Speisewasser, eine der Vorwärmstufe nachgeschaltete Dampferzeugungsstufe zur Erzeugung von Dampf und eine der Dampferzeugungsstufe nachgeschaltete Dampfüberhitzungsstufe zur Überhitzung des Dampfes. Diese drei Stufen sind in der Regel in Serie geschalten, wobei auch mehrere solcher Einheiten zur Erzeugung von überhitztem Dampf im Sekundärkreislauf parallel verschaltet sein können. Das heißt, dass jede einzelne in den Figuren dargestellte Stufe nicht nur einen, sondern auch zwei oder mehrere parallel geführte Vorwärmer bzw. Vorwärmeinheiten, Dampferzeuger bzw. Dampferzeugungseinheiten und Dampfüberhitzer bzw. Dampfüberhitzungseinheiten beinhalten kann.

Darüber hinaus umfasst der Wasserdampf-Sekundärkreis ein Dampfturbinensystem, welches über ein Dampfleitungssystem mit der Dampfüberhitzungsstufe verbunden ist und im Betrieb mit dem darin erzeugten, überhitzten Dampf gespeist wird. Das Dampfturbinensystem kann aus einer einzelnen Dampfturbine aufgebaut sein, wobei zur besseren Energieausnutzung und zur Erhöhung des Wirkungsgrades gewöhnlicher Weise mehrere Turbinenmodule eingesetzt werden. In Serie können sich dann ein, zwei oder mehrere Mitteldruckturbinen und/oder Niederdruckturbinen an die Hochdruckturbine(n) anschließen. Diese in Dampfrichtung der Hochdruckturbine(n) nachgeschalteten Mitteldruck- bzw. Niederdruckturbine(n) werden mit dem Dampf aus der bzw. den Hochdruckturbine(n) gespeist, der in einem Zwischenüberhitzer mit ein, zwei oder mehreren Wärmetauschern zwischen überhitzt worden ist. Auch eine Kaskade aus Hochdruck-, Mitteldruck- und Niederdruckturbinen ist zur Erhöhung des Wirkungsgrades bzw. der Gesamtleistung des Kraftwerks zweckmäßig.

In dem Sekundärkreis ist außerdem ein Kondensator bzw. ein Kondensatorsystem dem Dampfturbinensystem abdampfseitig nachgeschaltet, um den Dampf wieder zu kondensieren. Das erfindungsgemäße System kann auch ein oder mehrere Ableitungen für Anzapfdampf umfassen. Dieser Anzapfdampf kann zum Beispiel zum Vorwärmen des Speisewassers in einem Speisewasservorwärmsystem etc. eingesetzt werden. Außerdem umfasst der Sekundärkreis ein Wasserleitungssystem mit einem zwischen dem Kondensatorsystem und der Vorwärmstufe angeordneten Speisewassertank, der zur Bevorratung des Speisewassers dient. Ebenso umfasst das Wasserleitungssystem die üblichen Ventile, Pumpen und Steuerungseinheiten, die im Betrieb und im Ruhezustand des Kraftwerks das Wasserleitungssystem bzw. das Dampfleitungssystem kontrollieren und die Dampferzeugung regeln.

Als Speisewasser wird in dem erfindungsgemäßen System üblicher Weise Wasser eingesetzt, aber es können auch andere verdampfbare Arbeitsfluide mit zweckmäßigen Enthalpiewerten verwendet werden. Der Ausdruck "Wasser", "Wasserdampf" bzw. "Speisewasser" soll nicht einschränkend ausgelegt werden und kann generell durch andere Arbeitsfluide ersetzt werden.

Bei dem erfindungsgemäßen Betriebsverfahren wird im Betrieb in einem Primärkreis ein Wärmeträgermedium mittels einer solarthermischen Baugruppe mittels Solarenergie erwärmt und das erwärmte Wärmeträgermedium in eine Wärmetauschergruppe zur Übertragung der Wärmeenergie vom Wärmeträgermedium auf einen Sekundärkreis geleitet, bevor es abgekühlt wieder in die solarthermische Baugruppe eingespeist wird. In dem Wasserdampf-Sekundärkreis wird in der Wärmetauschergruppe Speisewasser aus einem Speisewassertank in einer Vorwärmstufe vorgewärmt, in einer der Vorwärmstufe nachgeschalteten Dampferzeugungsstufe Dampf erzeugt und in einer der Dampferzeugungsstufe nachgeschalteten Dampfüberhitzungsstufe der Dampf überhitzt. Danach wird mit dem überhitzten Dampf über ein Dampfleitungssystem ein direkt oder indirekt mit einem Generator gekoppeltes Dampfturbinensystem gespeist. Anschließend wird der aus dem Dampfturbinensystem austretende Dampf in einem Kondensatorsystem zu Wasser kondensiert und zu dem Speisewassertank zurückgeleitet.

Erfindungsgemäß wird ein Teilstrom des Wärmeträgermediums des Primärkreises in der Wärmetauschergruppe über mindestens eine Bypass-Leitung um die Dampfüberhitzungsstufe und/oder die Dampferzeugungsstufe des Sekundärkreises geleitet. Dadurch kann die in der solarthermischen Baugruppe durch das Wärmeträgermedium aufgenommene Wärmeenergie flexibler übertragen werden und damit gezielt mit erhöhten Prozesstemperaturen im Primär- und/oder Sekundärkreis gearbeitet werden.

Ein Kernpunkt der Idee ist es also, einen Teilstrom des heißen Wärmeträgermediums im Primärkreis in einer Bypass-Leitung um wenigstens die Dampfüberhitzungsstufe oder die Dampferzeugungsstufe herum zu leiten. Dies ermöglicht es, die Rücklauftemperatur des Wärmeträgermediums im Primärkreis an kritischen Stellen, an denen es je nach eingesetztem Wärmeträgermedium zu Auskristallisationen oder Verklumpungen kommen kann, wie der Vorwärmstufe oder dem zur solarthermischen Baugruppe rückläufigen Leitungssystem über der kritischen Temperatur, d.h. insbesondere über der Kristallisationstemperatur, zu halten.

Außerdem kann durch den Bypass das Wärmemanagement bei der Wärmeübertragung vom Primärkreislauf auf den Sekundärkreislauf und damit der Gesamtwirkungsgrad des Verfahrens verbessert werden. Dies wird vor allem durch die optimierte Verschaltung der Wärmetauschergruppe (bzw. der Wärmeüberträger bzw. Wärmeüberträgergruppen in der Wärmetauschergruppe) in dem Verfahren sowie durch die dadurch möglich gewordene Erhöhung der allgemeinen Prozesstemperatur erreicht.

Die hier dargestellten möglichen Verschaltungen beziehen sich unter anderem auf solarthermische Kraftwerke, die mit Salzschmelzen als Wärmeträgermedium im Primärkreis betrieben werden, da vor allem durch die höheren erreichbaren Prozesstemperaturen in diesen Kraftwerken und Betriebsverfahren ein besseres Optimierungspotential vorliegt. Die Verschaltungen können grundsätzlich aber auch für sämtliche andere Wärmeträgermedien, die als Primärkreismedium in einem solarthermischen Kraftwerk (insbesondere basierend auf Parabolrinnentechnologie, Fresnel-Kollektortechnologie oder Solar-Turmtechnologie) verwendet werden bzw. verwendet werden sollen, angewendet werden. Als zweckmäßige Wärmeträgermedien können zum Beispiel superkritisches CO₂, auf Schwefelverbindungen basierende Wärmeträger, Thermoöle, etc. in diesen Betriebsverfahren eingesetzt werden.

Bei der einfachsten Variante des erfindungsgemäßen Kraftwerks und Verfahrens können die Wärmetauschersysteme einsträngig (1 Wärmetauschergruppe) ausgeführt werden. In alternativen Varianten können die Wärmetauschersystem auch mehrsträngig (mindestens eine Wärmetauschergruppe parallel geschaltet) ausgeführt werden. Außerdem können in weiteren Ausführungsformen einzelne Apparate bzw. Baueinheiten in den Wärmetauschergruppen einsträngig oder mehrsträngig ausgeführt werden. Ob eine einsträngige oder mehrsträngige Ausführung der Wärmetauschergruppen oder der einzelnen Apparate bzw. Baueinheiten bevorzugt ist, hängt vor allem von der Größe des Kraftwerks und dem Kraftwerktyp an sich ab. Eine mehrsträngige Ausführung der Wärmetauscher bzw. Wärmetauschergruppen ist insbesondere bei sehr großen zu übertragenden Wärmeleistungen zweckmäßig. Die abhängigen Ansprüche sowie die nachfolgende Beschreibung enthalten besonders vorteilhafte Ausgestaltungen und Weiterbildungen der Erfindung, wobei explizit darauf hingewiesen wird, dass das erfindungsgemäße Verfahren auch entsprechend den abhängigen Ansprüchen zum solarthermischen Kraftwerk weitergebildet sein kann und umgekehrt.

In einer Ausführungsform eines solarthermischen Kraftwerks nach der vorliegenden Erfindung kann in der Bypass-Leitung um die Dampfüberhitzungsstüfe eine zusätzliche Dampfüberhitzungsstufe, zum Beispiel eine Zwischenüberhitzungsstufe zur erneuten Überhitzung des aus einer Hochdruckturbine abgeleiteten Abdampfes, angeordnet sein. Dieser erneut überhitzte Dampf kann dann in einer Mitteldruck- oder Niederdruckturbinenstufe erneut genutzt werden. Alternativ kann in der Bypass-Leitung anstatt oder zusätzlich zu einer zusätzlichen Dampfüberhitzungsstufe auch die Dampferzeugungsstufe angeordnet sein. Das heißt, dass in dieser Ausführungsvariante in der Wärmetauschergruppe die Dampfüberhitzungsstufe und die Dampferzeugungsstufe des Sekundärkreises parallel mit heißem Wärmeträgermedium aus dem Primärkreis beaufschlagt werden. Dadurch können Prozessparameter, wie ein Pinchpoint bei verschiedenen Prozessparametern gezielt eingestellt werden. Dies bewirkt im Vergleich mit einer gewöhnlichen Reihenschaltung von Dampfüberhitzungsstufe und Dampferzeugungsstufe, bei der diese Randbedingungen für die Prozessparameter (z.B. den Pinchpoint) nur mit Wirkungsgradverlusten eingehalten werden können, eine Steigerung des Wirkungsgrades.

In einer weiteren alternativen Ausführungsvariante des erfindungsgemäßen solarthermischen Kraftwerks kann in der Bypass-Leitung um die Dampferzeugungsstufe eine zusätzliche Dampfüberhitzungsstufe wie zum Beispiel eine Zwischenüberhitzung für den Abdampf aus der Hochdruck- oder Mitteldruckturbinenstufe angeordnet sein. Diese Verschaltung der Zwischenüberhitzung bringt den Vorteil, dass zur Vorwärmung des Dampfes zuerst dem Temperaturniveau entsprechend kälteres Wärmeträgermedium verwendet werden kann und die Überhitzung auf die gewünschte Endtemperatur mit heißem Wärmeträgermedium stattfinden kann. Diese Verschaltung der Zwischenüberhitzung kann in einem Apparat oder in zwei Apparaten ausgeführt werden. Der Vorteil von zwei Apparaten ist, dass geringere Wärmespannungen auftreten.

Weitere Verschaltungsvarianten zur Erhöhung des Gesamtwirkungsgrades eines erfindungsgemäßen solarthermischen Kraftwerks können in dem Wärmeträgermedium-Leitungssystem eine Leitung um die Vorwärmstufe herum aufweisen. Diese Leitung um die Vorwärmstufe ist keine Bypass-Leitung im Sinne der vorstehenden Definition, da sie nicht vor der Vorwärmstufe wieder in den Hauptmassenstrom zurückgeführt wird. Optional können in dieser Leitung eine oder mehrere zusätzliche Dampfüberhitzer bzw. eine Dampfüberhitzungsstufe, zum Beispiel für eine erste oder zweite Zwischenüberhitzung, angeordnet sein. Diese Verschaltung ist daran angepasst, dass zur Vorwärmung des Dampfes in der Zwischenüberhitzungsstufe zuerst ein dem Temperaturniveau entsprechend kälteres Wärmeträgermedium verwendet wird, bevor die Überhitzung auf die gewünschte Endtemperatur mit heißem Wärmeträgermedium stattfindet. Je nach Temperaturbedarf kann das heiße Wärmeträgermedium direkt vor der Dampfüberhitzungsstufe oder zwischen der Dampfüberhitzungsstufe und der Dampferzeugungsstufe abgezweigt werden.

Bei einer üblichen Zwischenüberhitzung wird das Wärmeträgermedium vor der Dampfüberhitzungsstufe abgeleitet und erst nach der Vorwärmstufe wieder in den Hauptstrom eingekoppelt. Dies ist im Sinne der vorliegenden Erfindung kein Bypass um eine Dampfüberhitzungsstufe oder Dampferzeugungsstufe, da diese nicht vor der Vorwärmstufe wieder in den Hauptstrom zurückgeführt wird. Erfindungsgemäß kann das solarthermische Kraftwerk aber auch ein Wärmeträgermedium-Leitungssystem umfassen, das eine zusätzliche Leitung aufweist, welche um die Dampfüberhitzungsstufe und die Dampferzeugungsstufe herumläuft. Optional kann diese Leitung auch mit um die Vorwärmstufe herumlaufen, wobei man dann nicht von einem Bypass im sinne der Erfindung spricht. In dieser kann optional eine zusätzliche Dampfüberhitzungsstufe mit zum Beispiel einem oder mehreren Zwischenüberhitzern angeordnet sein.

Wie in den vorstehenden Ausführungsvarianten schon angesprochen wurde, kann in den erfindungsgemäßen solarthermischen Kraftwerken die zusätzliche Dampfüberhitzungsstufe eine Zwischenüberhitzungsstufe sein. Übliche Zwischenüberhitzungsstufen können in erste und zweite Zwischenüberhitzungsstufen eingeteilt werden. Die erste Zwischenüberhitzung dient gewöhnlicher Weise zur Zwischenüberhitzung des aus der Hochdruckturbine abgeleiteten Dampfes, welcher dann in einer Mittel- oder Niederdruckturbine eingesetzt wird. Die zweite Zwischenüberhitzung dient gewöhnlicher Weise zur Überhitzung des aus der Mitteldruckturbine abgeleiteten Dampfes, welcher dann in der Niederdruckturbine genutzt wird. Eine erfindungsgemäße, bevorzugte Ausgestaltung ist, dass die Zwischenüberhitzungsstufe zumindest zwei Zwischenüberhitzungsstufen umfasst, die jeweils optional mehrere Zwischenüberhitzungsvorrichtungen umfassen können. Je nach Temperaturanforderung für die Zwischenüberhitzung wird hierzu zum Beispiel ein Bypass vor oder nach der Dampfüberhitzungsstufe abgeleitet und in Abhängigkeit des nach der ersten und/oder zweiten Zwischenüberhitzungsstufe erreichten Temperaturniveaus wieder vor oder nach der Dampferzeugungsstufe in das Wärmeträgermedium-Leitungssystem (bzw. den Hauptmassenstrom) zurückgeleitet bzw. eingekoppelt. Eine Kombination mit den vorherigen Verschaltungsvarianten, zum Beispiel mit einem Bypass, mit oder ohne die Dampferzeugungseinheit, um die Dampfüberhitzungsstufe oder mit einem Bypass um die Dampferzeugungsstufe, erhöhen die Flexibilität in der Einstellung der notwendigen Prozessparameter und dienen gleichzeitig zur Optimierung des Wärmemanagements. Somit können sie zur Steigerung des Gesamtwirkungsgrades beitragen.

Die in üblichen solarthermischen Kraftwerken eingesetzten thermischen Zwischenspeicher können erfindungsgemäß zusätzlich entweder im Primärkreis und/oder im Sekundärkreis angeordnet sein. Diese dienen unter anderem zur Speicherung der thermischen Energie im Speicherbetriebsmodus bzw. zur Entnahme von heißem Wärmeträgermedium bzw. überhitztem Dampf im Entnahmebetriebsmodus.

Zur Bevorratung von heißem oder kaltem Wärmeträgermedium, insbesondere in flüssiger Phase, können in einem erfindungsgemäßen solarthermischen Kraftwerk zusätzlich ein oder mehrere Speichertanks für das Wärmeträgermedium stromauf- und/oder stromabwärts der solarthermischen Baugruppe im Primärkreis angeordnet sein.

Zusätzlich kann in einem solchen solarthermischen Kraftwerk die solarthermische Baugruppe ein oder mehrere miteinander verschaltete Sonnenkollektoren oder ein ganzes Feld von Sonnenkollektoren umfassen. Dabei kommen als Sonnenkollektoren alle gewöhnlicher Weise eingesetzten Kollektortypen, wie zum Beispiel Rinnenkollektoren oder Fresnelkollektoren, in Frage. Diese können je nach Sonneneinstrahlung und Platzbedarf in Serien- und/oder Reihenschaltung angeordnet sein. Alternativ dazu kann die solarthermische Baugruppe auch aus mehreren Spiegeln und einem Turm-Receiver zum Sammeln der Sonnenenergie aufgebaut sein.

Die Erfindung wird im Folgenden anhand von Ausführungsbeispielen unter Hinweis auf die beigefügten Zeichnungen näher erläutert. Es zeigen:
Figur 1 ein vereinfachtes schematisches Blockdiagramm eines Grundkonzepts für eine Verschaltungsvariante nach dem Stand der Technik, die herkömmlicher weise für solarthermische Kraftwerke mit Thermoöl als Wärmeträgermedium im Primärkreis eingesetzt wird und die eine Zwischenüberhitzung mit umfasst,

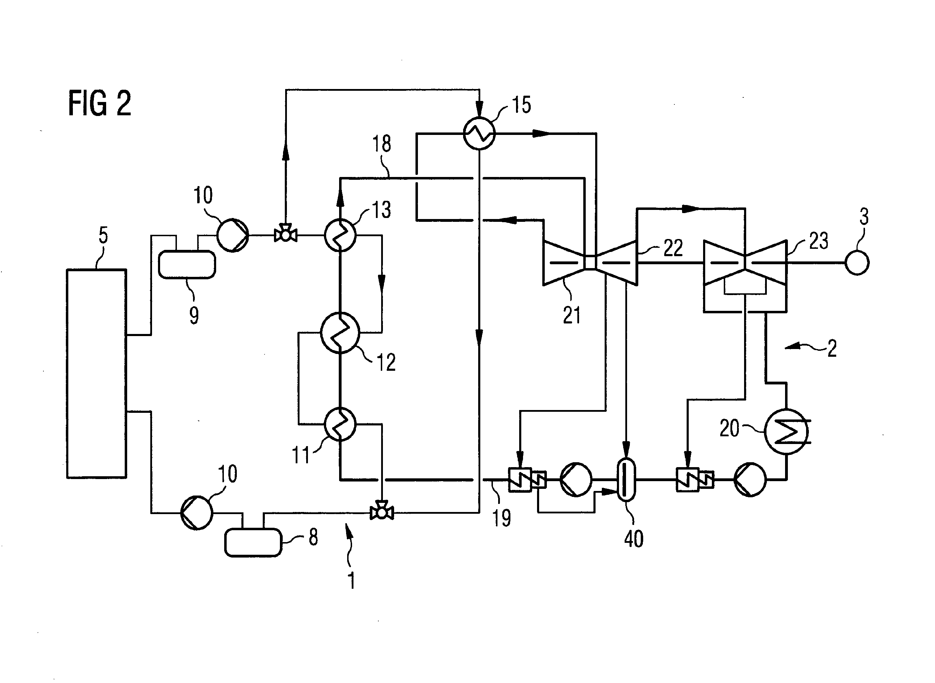

Figur 2 ein schematisches Blockdiagramm einer denkbaren einfachen Verschaltungsvariante für solarthermische Kraftwerke, die zwei Speichertanks für Wärmeträgermedien im Primärkreis umfasst,

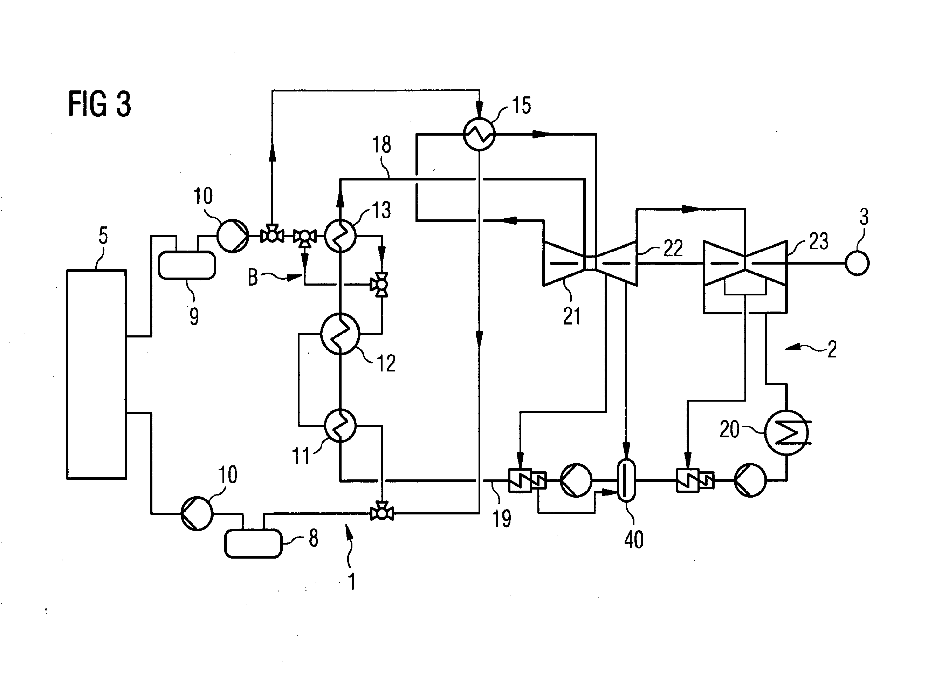

Figur 3 ein schematisches Blockdiagramm eines ersten Ausführungsbeispiels eines erfindungsgemäßen solarthermischen Kraftwerks mit indirekter Verdampfung und einfacher Zwischenüberhitzung, bei dem ein Bypass um die Dampfüberhitzungsstufe angeordnet ist,

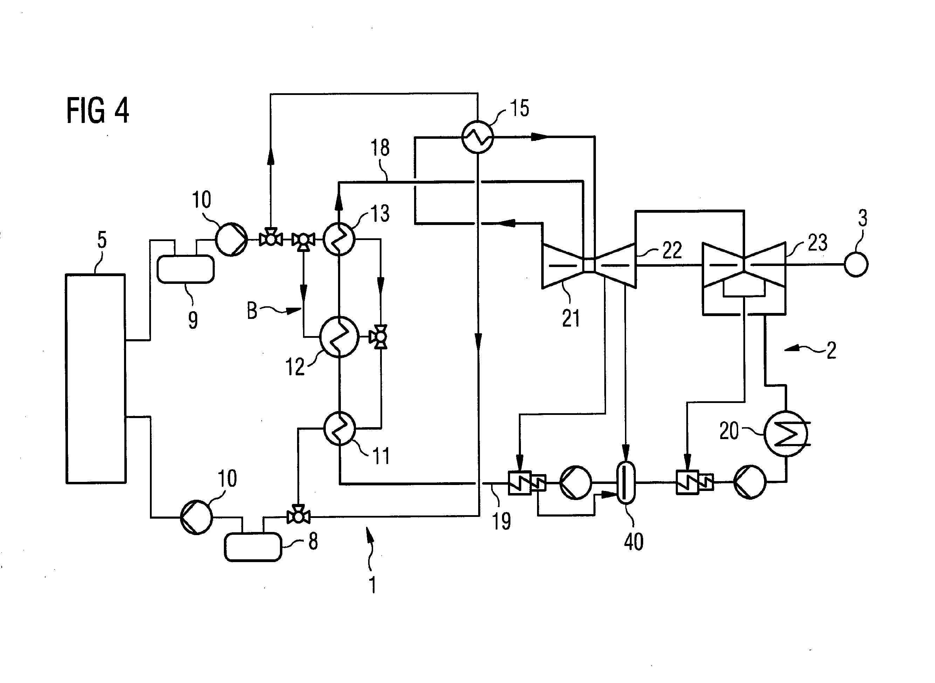

Figur 4 ein schematisches Blockdiagramm eines zweiten alternativen Ausführungsbeispiels eines erfindungsgemäßen solarthermischen Kraftwerks mit indirekter Verdampfung und einfacher Zwischenüberhitzung, bei dem im Bypass um die Dampfüberhitzungsstufe die Dampferzeugungsstufe angeordnet ist,

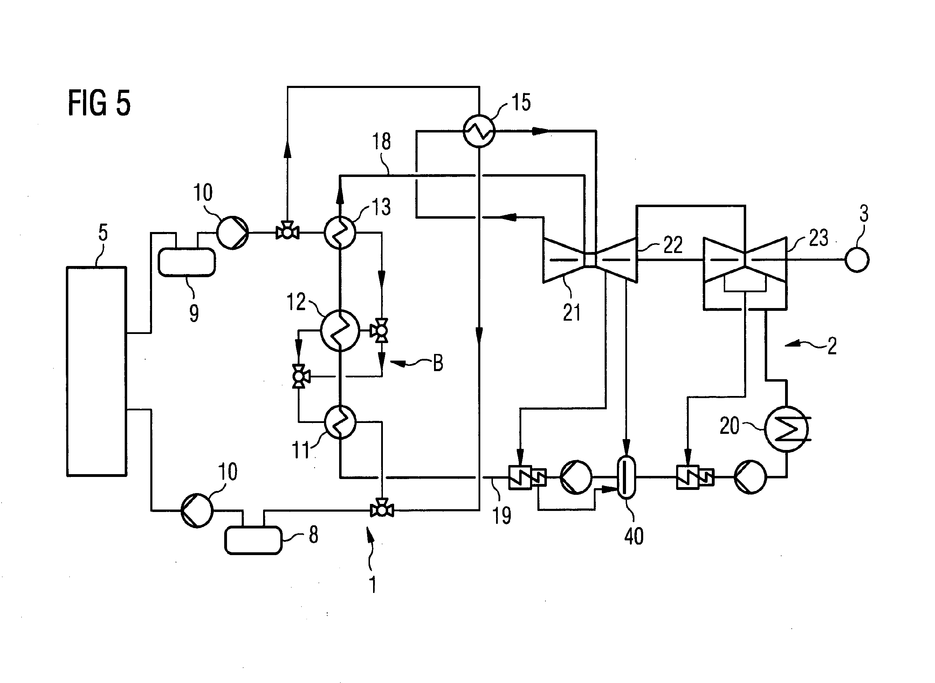

Figur 5 ein schematisches Blockdiagramm eines dritten alternativen Ausführungsbeispiels eines erfindungsgemäßen solarthermischen Kraftwerks mit indirekter Verdampfung und einfacher Zwischenüberhitzung, bei dem ein Bypass um die Dampferzeugungsstufe angeordnet ist,

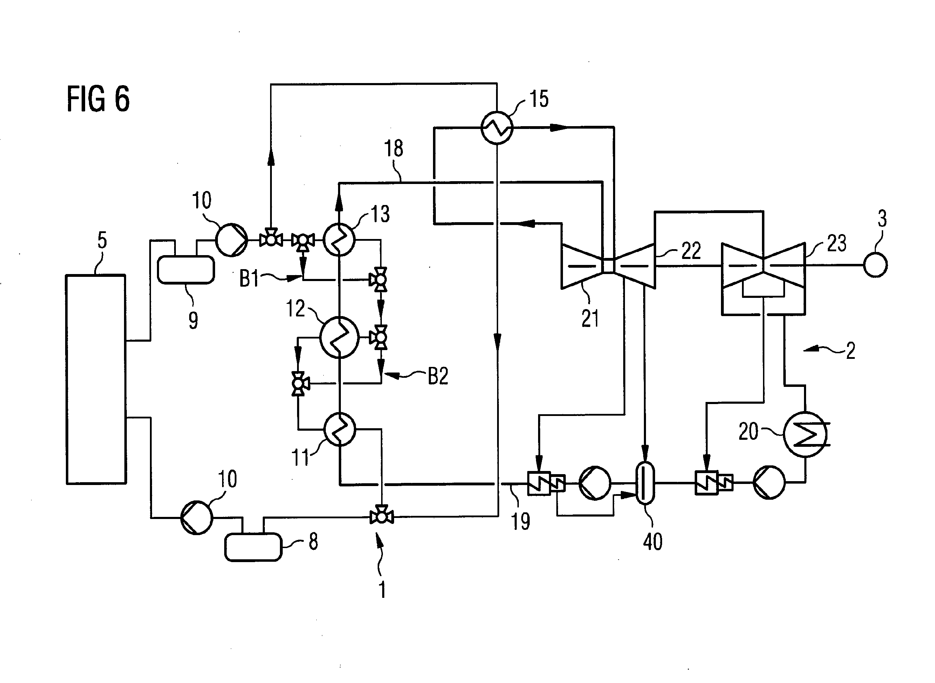

Figur 6 ein schematisches Blockdiagramm eines weiteren alternativen Ausführungsbeispiels eines erfindungsgemäßen solarthermischen Kraftwerks mit indirekter Verdampfung und einfacher Zwischenüberhitzung, bei dem sowohl ein Bypass um die Dampfüberhitzugsstufe als auch um die Dampferzeugungsstufe angeordnet ist,

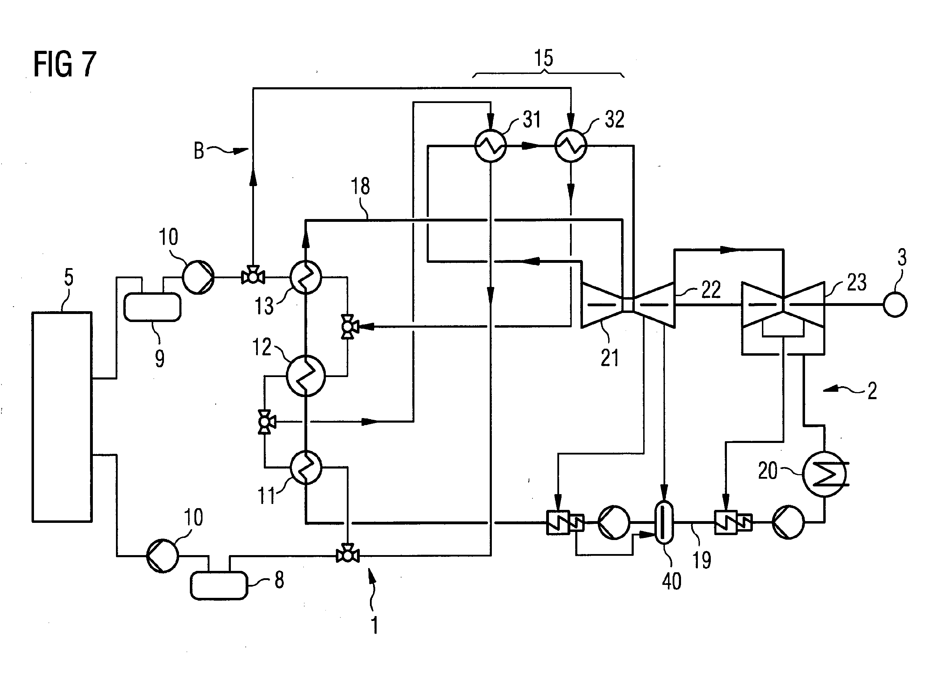

Figur 7 ein schematisches Blockdiagramm eines weiteren Ausführungsbeispiels eines erfindungsgemäßen solarthermischen Kraftwerks mit indirekter Verdampfung, das eine zweifache Entnahme des Wärmeträgermediums aus dem Dampferzeugungssystem mit Bypass um die Dampfüberhitzungsstufe zur Zwischenüberhitzung umfasst,

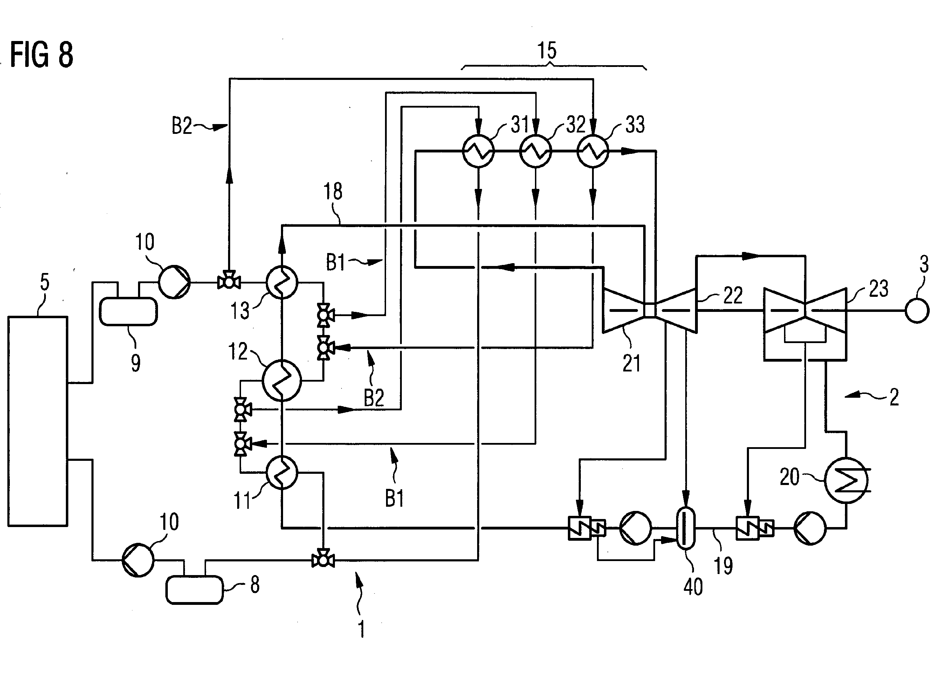

Figur 8 ein schematisches Blockdiagramm eines weiteren Ausführungsbeispiels eines erfindungsgemäßen solarthermischen Kraftwerks mit indirekter Verdampfung, das eine dreifache Entnahme des Wärmeträgermediums aus dem Dampferzeugungssystem mit jeweils einem Bypass um die Dampfüberhitzungsstufe und die Dampferzeugungsstufe zur Zwischenüberhitzung umfasst,

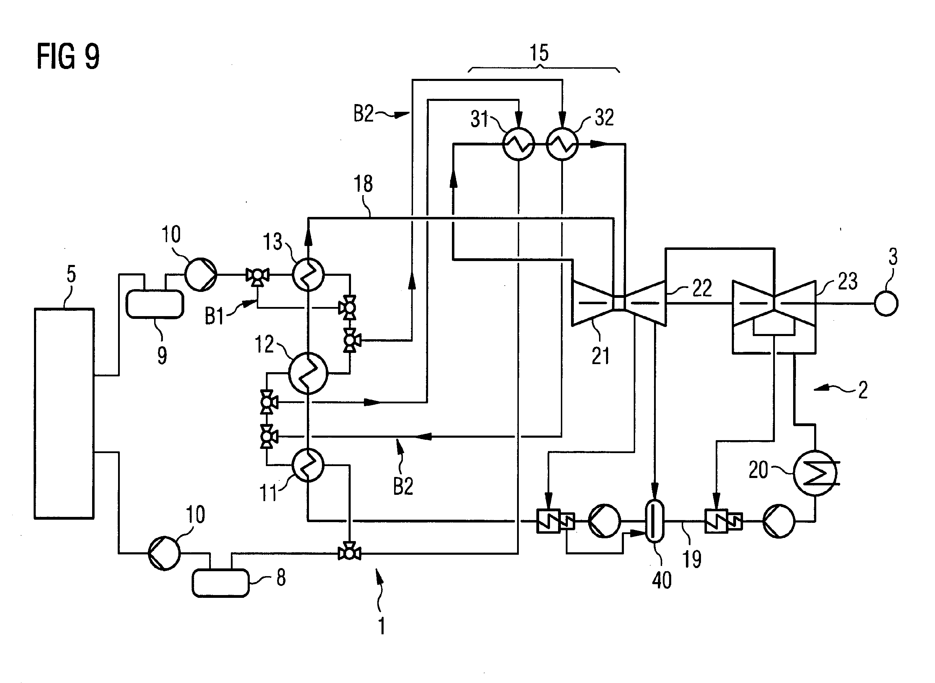

Figur 9 ein schematisches Blockdiagramm eines weiteren Ausführungsbeispiels eines erfindungsgemäßen solarthermischen Kraftwerks mit indirekter Verdampfung, das eine zweifache Entnahme des Wärmeträgermediums und eine Zwischenüberhitzung auf niedrigere Dampftemperatur als Frischdampftemperatur umfasst,

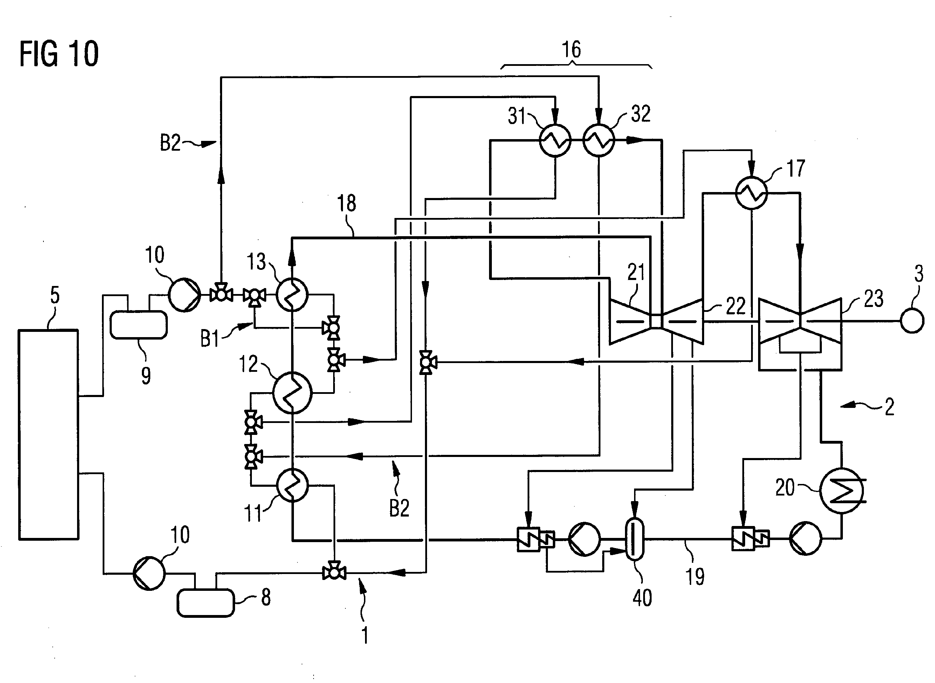

Figur 10 ein schematisches Blockdiagramm eines weiteren Ausführungsbeispiels eines erfindungsgemäßen solarthermischen Kraftwerks mit indirekter Verdampfung, das eine zweite Zwischenüberhitzung durch Entnahme des Wärmeträgermediums nach dem Bypass um die Dampfüberhitzungsstufe und Rückführung nach der Dampferzeugungsstufe umfasst,

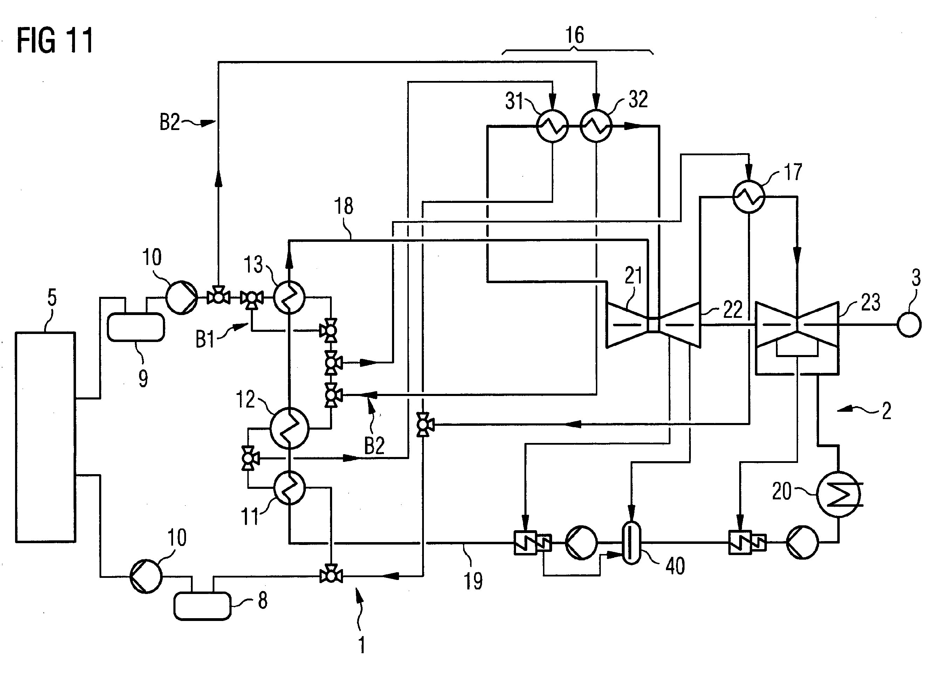

Figur 11 ein schematisches Blockdiagramm eines weiteren Ausführungsbeispiels eines erfindungsgemäßen solarthermischen Kraftwerks mit indirekter Verdampfung, das eine erste Zwischenüberhitzung in einem Bypass um die Dampfüberhitzungsstufe und eine zweite Zwischenüberhitzung durch Entnahme des Wärmeträgermediums nach dem Bypass um die Dampfüberhitzungsstufe und Rückführung vor der Vorwärmstufe umfasst,

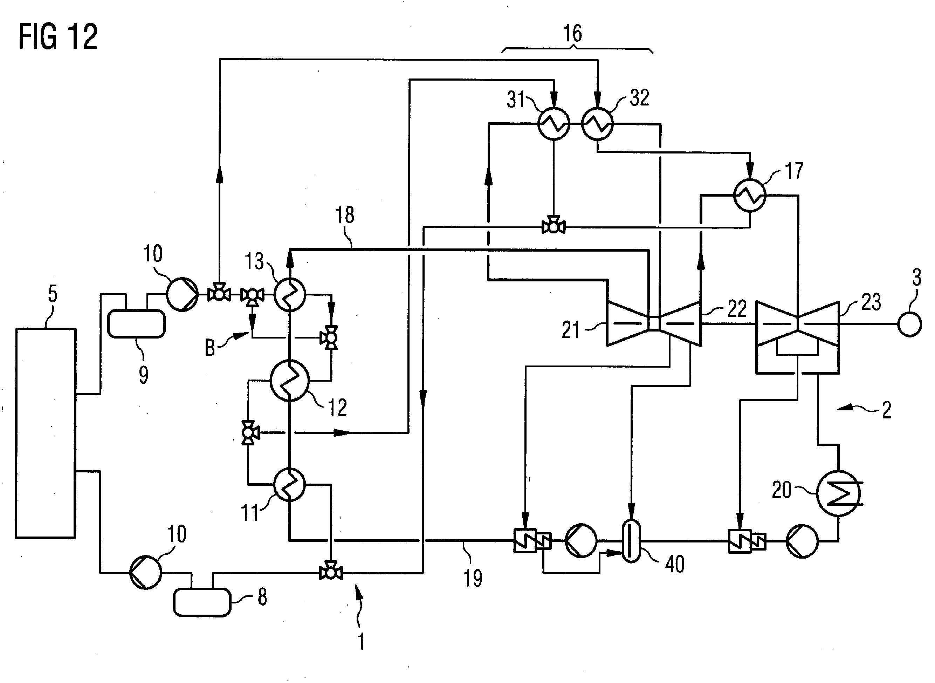

Figur 12 ein schematisches Blockdiagramm eines weiteren Ausführungsbeispiels eines erfindungsgemäßen solarthermischen Kraftwerks mit indirekter Verdampfung, das einen Bypass um die Dampfüberhitzungsstufe und eine zweite Zwischenüberhitzung durch Nutzung des nach der ersten Zwischenüberhitzung enthitzten Wärmeträgermediums umfasst,

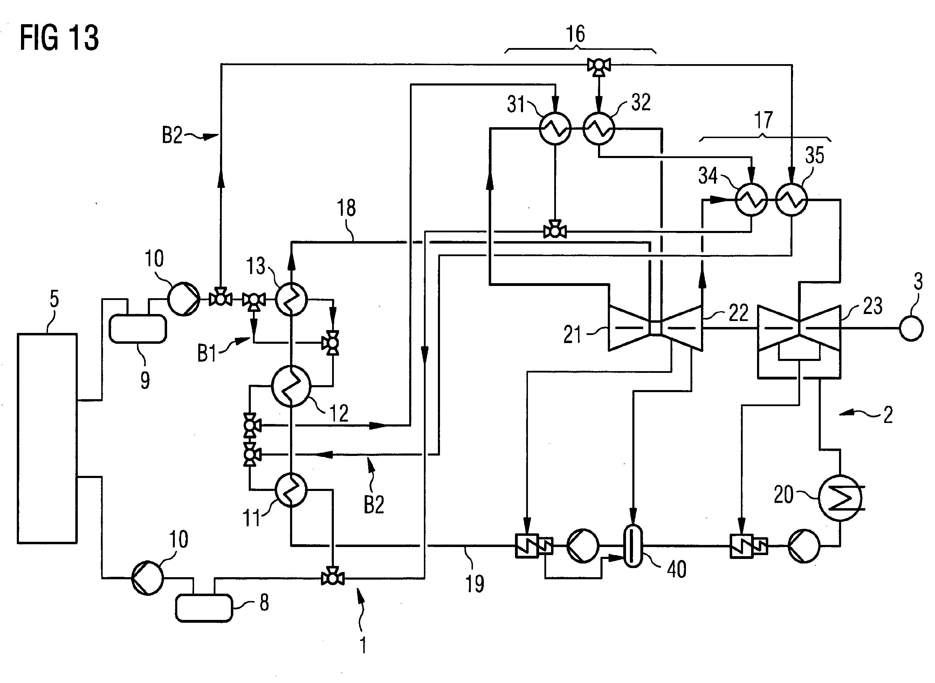

Figur 13 ein schematisches Blockdiagramm eines weiteren Ausführungsbeispiels eines erfindungsgemäßen solarthermischen Kraftwerks mit indirekter Verdampfung, das einen Bypass um die Dampfüberhitzungsstufe und eine zweite Zwischenüberhitzung durch Nutzung des nach der ersten Zwischenüberhitzung enthitzten Wärmeträgermediums und heißen Wärmeträgermediums umfasst,

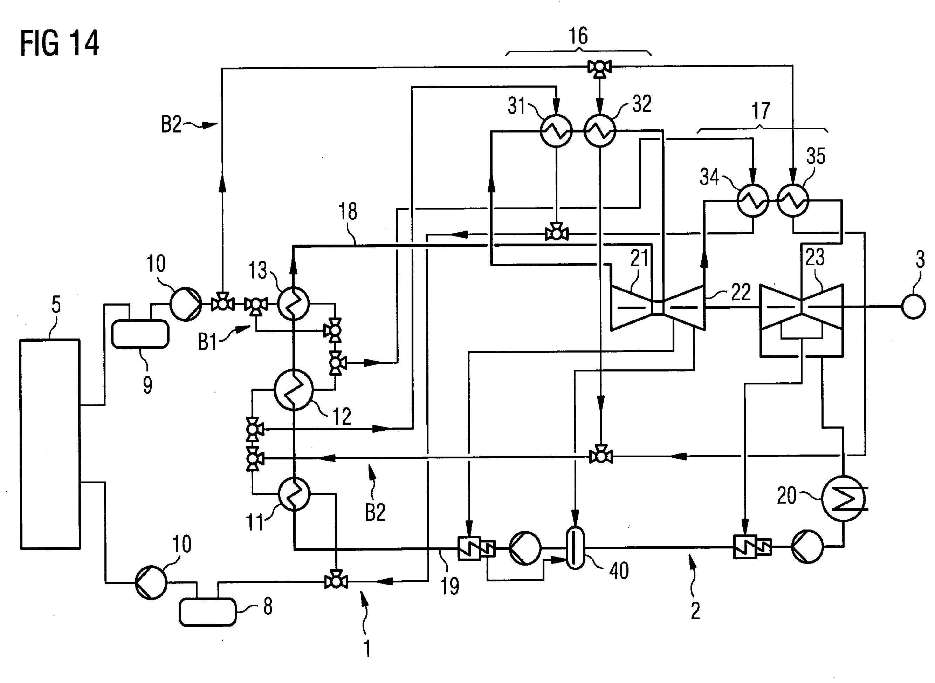

Figur 14 ein schematisches Blockdiagramm eines weiteren Ausführungsbeispiels eines erfindungsgemäßen solarthermischen Kraftwerks mit indirekter Verdampfung, das einen Bypass um die Dampfüberhitzungsstufe und eine zweite Zwischenüberhitzung durch zweifache Entnahme auf entsprechendem Temperaturniveau umfasst,

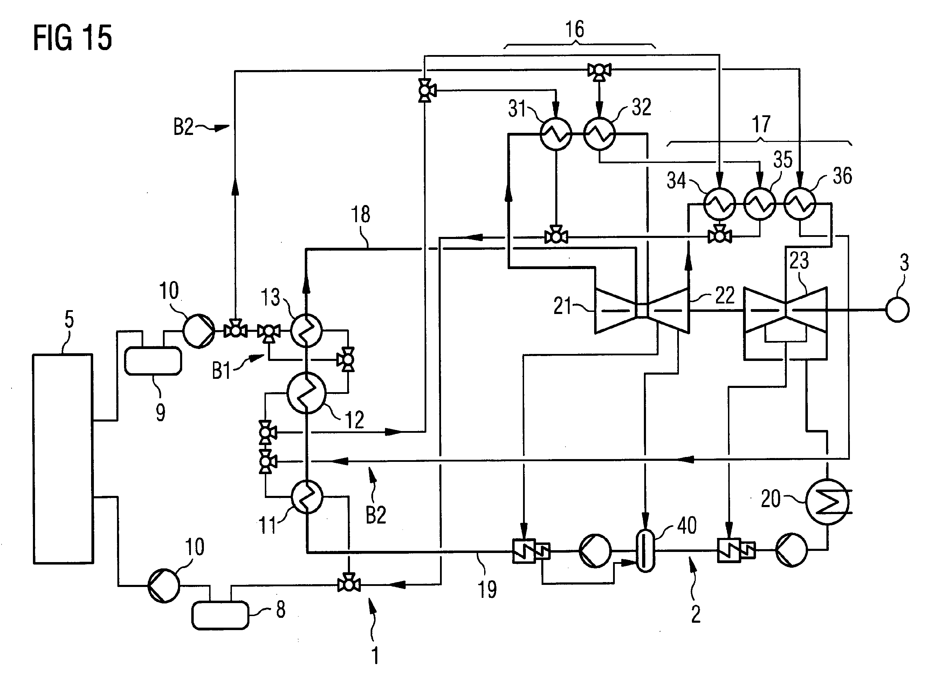

Figur 15 ein schematisches Blockdiagramm eines weiteren Ausführungsbeispiels eines erfindungsgemäßen solarthermischen Kraftwerks mit indirekter Verdampfung, das einen Bypass um die Dampfüberhitzungsstufe und eine zweite Zwischenüberhitzung durch zweifache Entnahme auf entsprechendem Temperaturniveau und Nutzung des enthitzten Wärmeträgermediums nach der ersten Zwischenüberhitzung umfasst.

Eine den meisten hierin näher erläuterten Ausführungsbeispielen zu Grunde liegende grundsätzliche Verschaltungsvariante für solarthermische Kraftwerke mit Thermoöl als Wärmeträgermedium im Primärkreis 1 ist in Figur 1 gezeigt. Hierbei besteht das Dampferzeugungssystem des Sekundärkreises in der Wärmetauschergruppe in herkömmlicher Weise aus einer Reihenschaltung aus der Vorwärmstufe 11 (bzw. auch Vorwärmer genannt), der Dampferzeugungsstufe 12 (bzw. auch Verdampfer genannt) und der Dampfüberhitzungsstufe 13 (bzw. auch Überhitzer genannt). Außerdem wird in der Regel eine Zwischenüberhitzung 15 eingebaut, um den Wirkungsgrad des Kraftwerks zu erhöhen.

Darüber hinaus umfasst der Wasserdampf-Sekundärkreis 2 ein Dampfturbinensystem 21, 22, 23, welches über ein Dampfleitungssystem 18 mit der Dampfüberhitzungsstufe 13 verbunden ist und im Betrieb mit dem darin erzeugten, überhitzten Dampf gespeist wird. Das Dampfturbinensystem 21, 22, 23 kann aus einer einzelnen Dampfturbine aufgebaut sein, wobei zur besseren Energieausnutzung und zur Erhöhung des Wirkungsgrades gewöhnlicher Weise zwei oder mehrere Hochdruck-Turbinen 21 parallel oder als Doppelturbinen betrieben werden. In Serie können sich dann ein, zwei oder mehrere Mitteldruckturbinen 22 und/oder Niederdruckturbinen 23 an die Hochdruckturbine(n) 21 anschließen. Diese in Dampfrichtung der Hochdruckturbine(n) 21 nachgeschaltete(n) Mitteldruckturbine(n) 22 bzw. Niederdruckturbine(n) 23 werden mit dem Dampf aus der bzw. den Hochdruckturbine(n) 21 gespeist, der in einem Zwischenüberhitzer mit ein, zwei oder mehreren Wärmetauschern zwischen überhitzt worden ist. Auch eine Kaskade aus Hochdruck-, Mitteldruck- und Niederdruckturbinen ist zur Erhöhung des Wirkungsgrades bzw. der Gesamtleistung des Kraftwerks zweckmäßig.

In dem Sekundärkreis ist außerdem ein Kondensator bzw. ein Kondensatorsystem 20 dem Dampfturbinensystem 21, 22, 23 abdampfseitig nachgeschaltet, um den Dampf wieder zu kondensieren. Das erfindungsgemäße System kann auch ein oder mehrere Ableitungen für Anzapfdampf umfassen. Dieser Anzapfdampf kann zum Beispiel zum Vorwärmen des Speisewassers in einem Speisewasservorwärmsystem etc. eingesetzt werden. Außerdem umfasst der Sekundärkreis ein Wasserleitungssystem 19 mit mindestens einem zwischen dem Kondensatorsystem 20 und der Vorwärmstufe angeordneten Speisewassertank 40, der zur Bevorratung des Speisewassers dient. Ebenso umfasst das Wasserleitungssystem die üblichen Ventile, Pumpen und Steuerungseinheiten, die im Betrieb und im Ruhezustand des Kraftwerks das Wasserleitungssystem 19 bzw. das Dampfleitungssystem 18 kontrollieren und die Dampferzeugung regeln.

Für den Einsatz von alternativen Wärmeträgermedien zu Thermoölen, die eine höhere Prozesstemperatur erfordern, wie zum Beispiel Salzschmelzen, ist es vorteilhaft, diese grundsätzliche Verschaltungsvariante zu modifizieren. Ein solches modifiziertes System, das insbesondere an Salzschmelzen als alternatives Wärmeträgermedium angepasst ist, ist in Figur 2 gezeigt. Im Primärkreis sind zwei Speichertanks 8,9 für das Wärmeträgermedium in das System eingebaut. Der erste Speichertank 8 befindet sich unmittelbar vor der solarthermischen Baugruppe 5 und dient der Speicherung von kaltem Wärmeträgermedium. Der zweite Speichertank 9 ist nach der solarthermischen Baugruppe 5 angeordnet und dient zur Zwischenspeicherung von heißem Wärmeträgermedium. Beiden Speichertanks nachgeschaltet ist jeweils eine Pumpe 10 zur Förderung der entsprechenden Menge an Wärmeträgermedium im Betriebsmodus.

Der Einsatz eines solchen modifizierten, herkömmlichen solarthermischen Kraftwerks mit indirekter Verdampfung zeigte jedoch Wirkungsgradeinschränkungen wegen ungünstigen Rücklauftemperaturen in den Hauptmassenstrom des Primärkreises. Außerdem traten bei Verwendung von Salzschmelzen beispielsweise Kristallisationsprobleme auf, wie zum Beispiel im Wärmeträgermedium-Speichertank 8 oder der diesem Speichertank 8 nachgeschalteten Wärmeträgerpumpe 10. Deshalb ist dieses System weiter verbessert und an die geänderten Prozessbedingungen bei erhöhten Temperaturen angepasst worden. Diese Verbesserungen und Modifikationen werden in den nachfolgenden Ausführungsbeispielen detaillierter erläutert, ohne den grundsätzlichen Aufbau des Systems zur indirekten Verdampfung grundlegend zu verändern.

Ein erstes Ausführungsbeispiel zur Verbesserung des Gesamtwirkungsgrades und zur zusätzlichen Lösung des vorstehend aufgeführten Kristallisationsproblems ist in der Figur 3 gezeigt. Der Primär- und Sekundärkreis sind im Grunde analog zu dem in Figur 2 gezeigten denkbaren Verschaltungssystem aufgebaut. Jedoch wird in diesem ersten Ausführungsbeispiel eine Teilmenge an heißem Wärmeträgermedium um die Dampfüberhitzungsstufe 13 (bzw. den Überhitzer) geleitet und nach der Dampfüberhitzungsstufe 13 in den Hauptmassenstrom wieder eingekoppelt. Das heißt, dass ein Teilstrom des Wärmeträgermediums in einem Bypass B um die Dampfüberhitzungsstufe 13 geführt wird.

Es ist bekannt, dass bei Verwendung von im gesamten Betriebstemperaturbereich einphasigen Wärmeträgermedien im Primärkreis 1, aufgrund der Verdampfung von Wasser im Sekundärkreis 2, die bei konstanter Temperatur stattfindet (abhängig vom Verdampfungsdruck), ein Pinchpoint von größer 3K an der Dampferzeugungsstufe 12 (bzw. dem Verdampfer) eingehalten werden sollte. Aufgrund dieser Randbedingung ist es üblich, dass in den herkömmlichen Systemen die Wärmeübertragung bei entsprechend schlechteren Prozessparametern ausgeführt wird, was in einem Wirkungsgradverlust des Gesamtsystems resultiert. Durch das Bypassen der Dampfüberhitzungsstufe 13 kann jedoch eine Verdampfung des Arbeitsfluides in der Dampferzeugungsstufe 12 des Sekundärkreislaufes mit dem gewünschten Pinchpoint gewährleistet werden. Gleichzeitig können durch diese Bypassführung (Bypass B) die an das jeweilige Wärmeträgermedium angepassten Prozessparameter eingehalten werden, so dass durch eine entsprechende Regelung des notwendigen Teilflusses an heißem Wärmeträgermedium eine Verklumpung bzw. Auskristallisation in der Vorwärmstufe 11 oder in den nachgeschalteten Arbeitseinheiten verhindert werden kann. Das heißt, durch den Bypass B kann mehr Wärmeenergie an der Dampfüberhitzungsstufe 13 vorbeigeleitet und in die Dampferzeugungsstufe 12 wieder eingekoppelt werden, so dass die Temperatur an den kritischen Stellen des Primärkreises an die geforderten Temperaturen, z.B. über der Kristallisationstemperatur, eingestellt werden kann.

Figur 4 zeigt ein zweites alternatives Ausführungsbeispiel des erfindungsgemäßen Systems. Durch den Einbau eines Bypasses B um die Dampfüberhitzungsstufe 13 (bzw. um den Überhitzer) und gleichzeitigem Einbau der Dampferzeugungsstufe 12 (bzw. des Verdampfers) in diesen Bypass können die Prozessparameter ebenfalls verbessert werden. Mit anderen Worten ausgedrückt, ist diese Bypassführung (Bypass B) eine Parallelschaltung der Dampfüberhitzungsstufe 13 und der Dampferzeugungsstufe 12. Bei der Parallelschaltung von der Dampferzeugungsstufe 12 und der Dampfüberhitzungsstufe 13 werden beide Stufen mit dem heißen Wärmeträgermedium beaufschlagt. Insbesondere durch die somit erzielte Erhöhung der Temperatur in der Dampferzeugungsstufe 12 kann der Pinchpoint leichter bei ansonsten gleichen Prozessparametern eingehalten werden. Nebenbei kann das Wärmemanagement des Gesamtsystems an das eingesetzte Wärmeträgermedium individuell angepasst werden. Durch diese Parallelschaltung von Dampfüberhitzungsstufe 13 und Dampferzeugungsstufe 12 kann insbesondere bei einem Einsatz von alternativen Wärmeträgermedien, wie Salzschmelzen oder höhersiedenden Thermoölen, das Wärmemanagement deutlich verbessert werden, was in einer Wirkungsgradsteigerung des Gesamtsystems resultiert.

In einem dritten alternativen Ausführungsbeispiel der Verschaltung eines erfindungsgemäßen solarthermischen Kraftwerks wird bei analoger Grundverschaltung (entsprechend Figur 2) die Dampferzeugungsstufe 12 mit einer Bypassleitung bzw. einem Bypass B versehen. Diese Variante ist in Figur 5 gezeigt.

Neben der Verbesserung des Wirkungsgrades kann durch diese geschickte Verschaltungsvariante zusätzlich die Stabilisierung des Wärmetauschprozesses bzw. sie Stabilisierung der Dampfproduktion sichergestellt werden. Hierbei wird ein Teilmassenstrom des Wärmeträgermediums um die Dampferzeugungsstufe 12 (bzw. den Verdampfer) geleitet, um bei extremen Betriebsbedingungen, z.B. sehr hohen Temperaturen der Salzschmelze bzw. Verklumpungstemperaturen des Wärmeträgermediums, eine stabile Dampfproduktion zu erreichen. Mit dieser Verschaltung können insbesondere kritische Betriebszustände, wie z.B. das Einfrieren des Wärmeträgermediums, was bei Wärmeträgermedien mit hohen Schmelztemperaturen auftreten kann, verhindert werden.

Diese Verschaltungsvariante kann mit den beiden grundsätzlichen Verschaltungsvarianten aus dem ersten bzw. zweiten Ausführungsbeispiel kombiniert werden. Das heißt, dass sowohl ein erster Bypass B1 um die Dampfüberhitzungsstufe 13 als auch ein zweiter Bypass B2 um die Dampferzeugungsstufe 12 im Wärmetauschersystem umfasst sein können. Eine solche Kombination aus beiden Bypässen B1, B2 ist in der Figur 6 gezeigt. Hier ist exemplarisch die Kombination eines ersten Bypasses B1 um die Dampfüberhitzungsstufe 13 (bzw. eines Überhitzerbypasses) und eines zweiten Bypasses B2 um die Dampferzeugungsstufe 12 (bzw. eines Verdampferbypasses) in einem erfindungsgemäßen solarthermischen Kraftwerk gezeigt.

Zusätzlich zu den vorstehend angeführten Ausführungsbeispielen kann erfindungsgemäß der Bypass um die Dampfüberhitzungsstufe 13 bzw. Dampferzeugungsstufe 12 nicht nur zur Optimierung des Wärmemanagements, sondern nebenbei auch noch zur Zwischenüberhitzung des aus der Hochdruckturbine abgeleiteten Dampfes genutzt werden. Verschiedene Verschaltungsvarianten sind hier denkbar und ein paar sollen exemplarisch zur Veranschaulichung der Erfindung im Folgenden an Hand von weiteren Ausführungsbeispielen erläutert werden. Sämtliche Verschaltungsvarianten können auch mit den vorstehend in den ersten bis dritten Ausführungsbeispielen erläuterten grundsätzlichen Verschaltungsvarianten in Kombination ausgeführt werden.

In einer ersten alternativen Ausführungsform eines solchen solarthermischen Kraftwerks mit einem Bypass zur Zwischenüberhitzung ermöglicht eine Entnahme des Wärmeträgermediums aus dem Dampferzeugungssystem auf entsprechendem Temperaturniveau eine optimierte Zwischenüberhitzung des Dampfes. Ein bevorzugtes Ausführungsbeispiel hierfür ist in Figur 7 gezeigt. Bei dieser Variante wird in der Zwischenüberhitzungsstufe 15 in einer ersten Zwischenüberhitzungsvorrichtung 31 eine erste Überhitzung mit einem nach der Dampferzeugungsstufe 12 entnommenen Wärmeträgermedium durchgeführt. Danach wird in einer zweiten Zwischenüberhitzungsvorrichtung 32 eine zweite Überhitzung mit heißem, vor der Dampfüberhitzungsstufe 13 abgezweigtem Wärmeträgermedium durchgeführt. Der Vorteil einer solchen Verschaltung ist, dass durch die Entnahme auf dem entsprechenden Temperaturniveau nur für die Überhitzung auf die gewünschte Endtemperatur entsprechend hochwertiges (heißes) Wärmeträgermedium verwendet wird.

Je nach Temperaturniveau des enthitzten Wärmeträgermediums wird es nach Überhitzung des Dampfes in der Zwischenüberhitzungsstufe 15 in den Hauptmassenstrom des Wärmeträgermediums zurückgeführt. Dadurch kann die restliche Wärme des enthitzten Wärmeträgermediums noch optimal für die Erwärmung des Speisewassers, zum Beispiel in der Vorwärmstufe 11 oder in der Dampferzeugungsstufe 12, genutzt werden. In dem in Figur 7 gezeigten Ausführungsbeispiel wird das Wärmeträgermedium entsprechend des Temperaturniveaus nach der Enthitzung in der Zwischenüberhitzungsvorrichtung 32 nach der Dampfüberhitzungsstufe 13 bzw. nach der Enthitzung in der Zwischenüberhitzungsvorrichtung 31 nach der Vorwärmstufe 11 in den Hauptmassenstrom eingeleitet.

Die erste Zwischenüberhitzungsableitung wird also, wie in Figur 7 gezeigt ist, in einem erfindungsgemäßen Bypass B um die Dampfüberhitzungsstufe 13 geleitet, Die dem Temperaturniveau entsprechende Einkopplung des enthitzten Wärmeträgermediums verbessert dabei das Wärmemanagement weiter, da die in dem enthitzten Wärmeträgermedium verbleibende Energie noch in einer weiteren Wärmetauscherstufe eingebracht werden kann. Dadurch kann der Wirkungsgrad der Anlage gesteigert werden. Dass die zusätzliche Verrohrung und die zusätzlichen Wärmeüberträgereinheiten (Wärmetauscher) höhere Investitionskosten bedeuten, sollte bei der Planung mit berücksichtigt werden. Gewöhnlich rentieren sich diese einmaligen Kosten jedoch durch den gesteigerten Gesamtwirkungsgrad der Anlage recht schnell. Diese Verschaltungsvariante kann ebenso in Kombination mit den vorstehenden drei grundsätzlichen Bypass-Varianten aus dem ersten bis dritten Ausführungsbeispiel ausgeführt werden, auch wenn sie hier nicht explizit beschrieben sind.

Ähnlich wie in dem vorstehend erläuterten Ausführungsbeispiel kann in dem nächsten alternativen Ausführungsbeispiel, in dem eine dreifache bzw. mehrfache Entnahme des Wärmeträgermediums auf entsprechendem Temperaturniveau umfasst ist, der Gesamtwirkungsgrad noch weiter gesteigert werden (siehe Figur 8). Grundsätzlich ist dieses Verschaltungsvariante wie die vorhergehende aufgebaut und stellt eine weitere Detaillierung dar. Mit einer weiteren Entnahme auf entsprechendem Temperaturniveau und entsprechend angepasster Rückleitung des enthitzten Wärmeträgermediums in den Hauptmassenstrom, wie es in Figur 8 gezeigt ist, kann der Wirkungsgrad der Anlage weiter gesteigert werden. Genauer gesagt wird in der Zwischenüberhitzungsstufe 15 für eine erste Überhitzung des Dampfes in der Zwischenüberhitzungsvorrichtung 31 das Wärmeträgermedium nach der Dampferzeugungsstufe 12 entnommen und nach der Enthitzung wieder nach der Vorwärmstufe 11 in den Hauptmassenstrom eingekoppelt. Für die zweite Überhitzung in der Zwischenüberhitzungsvorrichtung 32 wird das Wärmeträgermedium vor der Dampferzeugungsstufe 12 entnommen und nach Enthitzung nach der Dampferzeugungsstufe 12 wieder in den Hauptmassenstrom eingeleitet (erster Bypass B1). Die Überhitzung auf die gewünschte Endtemperatur (dritte Überhitzung) in der Zwischenüberhitzungsvorrichtung 33 wird dann wieder mit heißem Wärmeträgermedium durchgeführt, das nach der Enthitzung wieder vor der Dampferzeugungsstufe 12 in den Hauptmassenstrom eingekoppelt wird (zweiter Bypass B2).

Durch diese Kaskadierung von Zwischenüberhitzungsvorrichtungen 31, 32, 33 kann der Wirkungsgrad der Anlage weiter gesteigert werden, aber auch der bauliche Aufwand und damit die Investitionskosten können sich vergrößern. Diese Kaskadierung kann ebenso entsprechend mit den vorstehend dargestellten drei grundsätzlichen Verschaltungsvarianten aus den ersten bis dritten Ausführungsbeispielen, d.h. der direkten Bypassführung um die Dampfüberhitzungsstufe 13 und/oder um die Dampferzeugungsstufe 12 ausgeführt werden. Ebenso ist eine weitere Erhöhung der Anzahl an Entnahmen und entsprechenden Einkopplungen möglich.

Weitere alternative Verschaltungsmöglichkeiten in einem erfindungsgemäßen solarthermischen Kraftwerk mit indirekter Verdampfung ergeben sich dadurch, dass die Dampftemperatur bei der Zwischenüberhitzungsstufe 15 nicht mehr auf Frischdampftemperaturniveau überhitzt wird, sondern auf eine geringere Temperatur. Hierzu kann das Wärmeträgermedium nach der Dampfüberhitzungsstufe 13 und dem Bypass B1 (siehe Figur 9) um die Dampfüberhitzungsstufe (bzw. dem Überhitzerbypass) aus dem Hautpmassenstrom entnommen und zur Zwischenüberhitzung des Dampfes in der Zwischenüberhitzungsvorrichtung 32 verwendet werden. Nach Enthitzung kann das Wärmeträgermedium wieder entsprechend dem Temperaturniveau an der richtigen Stelle in den Hauptmassenstrom eingekoppelt werden.

In Figur 9 ist ein bevorzugtes Ausführungsbeispiel einer solchen Verschaltungsvariante in der Zwischenüberhitzungsstufe 15 gezeigt. Bei dieser in Figur 9 dargestellten Variante wird ein Teilstrom des Wärmeträgermediums nach der Dampferzeugungsstufe 12 für eine erste Überhitzung in der Zwischenüberhitzungsvorrichtung 31 (d.h. in dem ersten Wärmetauschersystem der Zwischenüberhitzungsstufe) entnommen. Außerdem wird ein Teilstrom des Wärmeträgermediums nach der Dampfüberhitzungsstufe 13 mit Überhitzerbypass B1 entnommen, der zur Überhitzung auf die gewünschte Dampftemperatur in einer zweiten Zwischenüberhitzungsvorrichtung 32 (d.h. einem zweiten Wärmetauschersystem der Zwischenüberhitzungsstufe 15) eingesetzt wird. Beide enthitzten Massenströme werden entsprechend ihrer Temperaturniveaus wieder in den Hauptmassenstrom zurückgeführt, und zwar gemäß der in Figur 9 exemplarisch gezeigten Variante nach der Vorwärmstufe 11 bzw. nach der Dampferzeugungsstufe 12. Hierbei ist die zweite Zwischenüberhitzungsvorrichtung in einer zweiten Bypassleitung (Bypass B2) angeordnet.

Die Figuren 10 bis 15 zeigen weitere alternative Verschaltungsvarianten, denen allen eine doppelte Zwischenüberhitzung zu Grund liegt. Diese basieren auf den vorstehend erläuterten grundsätzlichen Verschaltungsvarianten und den Verschaltungsvarianten zur einfachen Zwischenüberhitzung und sind Weiterentwicklungen und Verbesserungen der herkömmlichen doppelten Zwischenüberhitzung. Die im Folgenden dargestellten Varianten können mit den drei grundsätzlichen Verschaltungen aus dem ersten bis dritten Ausführungsbeispiel sowie sämtlichen, vorstehend erläuterten Verschaltungen zur einfachen Zwischenüberhitzung kombiniert werden. Exemplarisch werden nachstehend einige bevorzugte Verschaltungsvarianten zur Erklärung des erfindungsgemäßen Konzeptes herangezogen, ohne dabei die Erfindung auf die hierin explizit aufgeführten Beispiele zu beschränken.

Die Figur 10 zeigt ein Ausführungsbeispiel mit einer doppelten Zwischenüberhitzung auf geringeres Temperaturniveau bei der zweiten Zwischenüberhitzungsstufe 17 als Frischdampftemperatur. Das heißt, dass die zweite Zwischenüberhitzung auf ein unter Frischdampftemperatur liegendes Temperaturniveau erfolgt. In diesem Ausführungsbeispiel wird dem Hauptmassenstrom ein Teilstrom des Wärmeträgermediums nach der Dampfüberhitzungsstufe 13 und dem ersten Bypass B1 um die Dampfüberhitzungsstufe 13 entnommen und der nach der Mitteldruckturbine 22 angeordneten zweiten Zwischenüberhitzungsstufe 17 zugeführt und entsprechend dem Temperaturniveau wieder in den Hauptmassenstrom eingekoppelt. Durch die Entnahme nach der Dampfüberhitzungsstufe 13 kann der Dampf in der zweiten Zwischenüberhitzungsstufe 17 nicht mehr auf die Temperatur des Frischdampfes zwischen überhitzt werden, sondern nur auf ein geringeres Temperaturniveau.

Die Verschaltung der ersten Zwischenüberhitzungsstufe 16 kann analog den vorstehenden Ausführungsbeispielen, zum Beispiel mit einem zweiten Bypass B2, durchgeführt werden. Außerdem kann die in Figur 10 exemplarisch gezeigte Verschaltungsvariante in Kombination mit den drei grundsätzlichen Variationen aus dem ersten bis dritten Ausführungsbeispiel als auch mit den verschiedenen Varianten zur einfachen Zwischenüberhitzung ausgeführt werden.

Ein weiteres Ausführungsbeispiel ist in Fig. 11 gezeigt. Im Unterschied zu Fig. 10, wo das Wärmeträgermedium nach der zweiten Zwischenüberhitzungsvorrichtung 32 in der ersten Zwischenüberhitzungsstufe 16 in den Hauptmassenstrom wieder nach der Dampferzeugungsstufe 12 eingekoppelt wird (d.h. bei dem die Zwischenüberhitzungsvorrichtung 32 im Bypass um die Dampfüberhitzungsstufe 13 und die Dampferzeugungsstufe 12 angeordnet ist), wird in Fig. 11 das Wärmeträgermedium vor der Dampferzeugungsstufe 12 wieder in den Hauptmassenstrom zurück geleitet (Bypass B2). Also befindet sich in dem in Fig. 11 gezeigten Ausführungsbeispiel die Zwischenüberhitzungsvorrichtung 32 der ersten Zwischenüberhitzungsstufe 16 in einem Bypass B2 um die Dampfüberhitzungsstufe 13.

Figur 12 zeigt ein weiteres Ausführungsbeispiel für eine Verschaltungsvariante mit doppelter Zwischenüberhitzungsstufe und einem Bypass B um die Dampfüberhitzungsstufe 13, bei welcher der Dampf auf ein geringeres Temperaturniveau bei der zweiten Zwischenüberhitzung als Frischdampftemperatur erhitzt wird. Das heißt, dass die zweite Zwischenüberhitzung auf ein unter Frischdampftemperatur liegendes Temperaturniveau erfolgt. Dies wird durch die Nutzung des nach der ersten Zwischenüberhitzungsstufe 16 enthitzten Wärmeträgermediums für die zweite Zwischenüberhitzungsstufe 17 erreicht. Nach der zweiten Zwischenüberhitzungsstufe 17 wird es dann wieder in den Hauptmassenstrom nach der Vorwärmstufe 11 eingekoppelt. Durch diese Verschaltung kann nur eine deutlich geringere Dampftemperatur als die Frischdampftemperatur in der zweiten Zwischenüberhitzung erreicht werden. Auch diese Variante kann wiederum mit allen vorstehend beschriebenen grundsätzlichen Varianten zur Verschaltung des Dampferzeugungssystems und zur ersten Zwischenüberhitzung kombiniert werden.

In Figur 13 ist ein weiteres Ausführungsbeispiel für die doppelte Zwischenüberhitzung gezeigt. Bei diesem Ausführungsbeispiel lässt sich durch Nutzung des heißen Wärmeträgermediums für eine weitere Überhitzung in der zweiten Zwischenüberhitzungsstufe die gewünschte Endtemperatur (z.B. gleiche Temperatur wie Frischdampf) erreichen. Hierzu wird die in Figur 12 gezeigte Variante um eine weitere Zwischenüberhitzungsvorrichtung 35 in der zweiten Zwischenüberhitzungsstufe 17 erweitert. Diese Zwischenüberhitzungsvorrichtung 35 wird mit heißem Wärmeträgermedium, das vor der Dampfüberhitzungsstufe 13 aus dem Hauptmassenstrom entnommen wurde, beaufschlagt. Das enthitzte Wärmeträgermedium wird wieder entsprechend seines Temperaturniveaus in den Hauptmassenstrom nach der Dampferzeugungsstufe 12 (siehe Bypass B2) eingekoppelt. Diese Variante kann wiederum mit sämtlichen vorstehend erläuterten Varianten für das Dampferzeugungssystem sowie für die erste Zwischenüberhitzung gekoppelt werden.

In einer weiteren alternativen Ausführungsform wird bei der zweiten Zwischenüberhitzungsstufe 17 durch eine zweifache oder mehrfache Entnahme des Wärmeträgermediums auf verschiedenen Temperaturniveaus und eine doppelte Zwischenüberhitzung das gleiche Temperaturniveau wie Frischdampftemperatur erreicht. Durch die Nutzung des Wärmeträgermediums auf unterschiedlichen Temperaturniveaus zur zweiten Zwischenüberhitzung kann der Wärmeaustausch effektiver gestaltet werden. Wie in der in Figur 8 gezeigten Variante (Kaskadierung der Wärmeübertragung durch dreifache bzw. mehrfache Entnahme des Wärmeträgermediums auf entsprechendem Temperaturniveau) kann auch bei der zweiten Zwischenüberhitzung der Wärmeaustausch durch dreifache oder mehrfache Entnahme des Wärmeträgermediums auf dem notwendigen Temperaturniveau entsprechend optimiert werden.

Zum Beispiel wird in dem in Figur 14 dargestellten, exemplarischen Ausführungsbeispiel die zweifache Entnahme des Wärmeträgermediums aus dem Hauptmassenstrom für die zweite Zwischenüberhitzungsstufe 17 vorgestellt. Bei der zweifachen Entnahme wird das Wärmeträgermedium für eine erste Überhitzung in der ersten Zwischenüberhitzungsvorrichtung 34 in der zweiten Zwischenüberhitzungsstufe 17 zum Beispiel nach dem Bypass der Dampfüberhitzungsstufe 13 entnommen und nach der Enthitzung enstprechend dem Temperaturniveau in den Hauptmassenstrom eingekoppelt. Die endgültige Überhitzung auf das gewünschte Temperaturniveau in der zweiten Zwischenüberhitzungsvorrichtung 35 der zweiten Zwischenüberhitzungsstufe 17 wird dann durch eine Entnahme von Frischdampf vor der Dampfüberhitzungsstufe 13 durchgeführt. Auch hier befindet sich die zweite Zwischenüberhitzungsvorrichtung 35 der zweiten Zwischenüberhitzungsstufe 17 in einem Bypass um die Dampfüberhitzungsstufe 13 und die Dampferzeugungsstufe 12.

Weitere Entnahmen auf entsprechendem Temperaturniveau (wie z.B. dreifache Entnahme) und damit zusätzliche Wärmetauscher sind für die zweite Zwischenüberhitzung ebenso wie für die erste Zwischenüberhitzung denkbar. Die mehrfache Entnahme zur Optimierung der zweiten Zwischenüberhitzung lässt sich mit sämtlichen vorstehend erläuterten grundsätzlichen Verschaltungsvarianten des Dampferzeugungssystems und sämtlichen Verschaltungsvarianten der ersten Zwischenüberhitzung kombinieren.

In Figur 15 ist eine Verschaltungsvariation bei der doppelten Zwischenüberhitzung dargestellt. Und zwar erfolgt hier durch mehrfache Entnahme des Wärmeträgermediums auf verschiedenen Temperaturniveaus und Nutzung des enthitzten Wärmeträgermediums aus der ersten Zwischenüberhitzungsstufe 16 bei der zweiten Zwischenüberhitzungsvorrichtung 35 der zweiten Zwischenüberhitzungsstufe eine Zwischenüberhitzung auf gleiches Temperaturniveau (siehe Bypass B2)wie Frischdampftemperatur . Das nach der ersten Zwischenüberhitzungsstufe 16 enthitzte Wärmeträgermedium (analog der in Figur 12 oder 13 gezeigten Varianten) kann mit einer mehrfachen Entnahme des Wärmeträgermediums auf verschiedenen Temperaturniveaus kombiniert werden und somit das Wärmemanagement weiter verbessert werden. Es sind sowohl die Nutzung mehrerer enthitzter Wärmeträgerströme nach der ersten Enthitzung als auch mehrere Entnahmen auf entsprechendem Temperaturniveau aus dem Hauptmassenstrom denkbar.

Als ein bevorzugtes Beispiel wird in Figur 15 die Nutzung eines in der ersten Zwischenüberhitzung enthitzten Wärmeträgermassenstromes und die Nutzung von zwei Wärmeträger-Teilströmen mit unterschiedlichen Temperaturniveaus in den Zwischenüberhitzungsvorrichtungen 34, 35, 36 der zweiten Zwischenüberhitzungsstufe 17 dargestellt. Wie bei allen Varianten sind sämtliche vorstehend erläuterte Kombinationen aus Dampferzeugungsverschaltung und Verschaltung der ersten Zwischenüberhitzung denkbar.

Es wird abschließend noch einmal darauf hingewiesen, dass es sich bei den vorhergehend detailliert beschriebenen Verschaltungsvariationen für solarthermischen Kraftwerke und Betriebsverfahren hierfür lediglich um bevorzugte Ausführungsbeispiele handelt, welche vom Fachmann in verschiedenster Weise modifiziert werden können, ohne den Bereich der Erfindung zu verlassen, soweit er durch die Ansprüche vorgegeben ist. Insbesondere sind die einzelnen dargestellten Variationen untereinander kombinierbar.

Es sind zum Beispiel Verschaltungsvarianten denkbar, in denen einzelne Wärmetauscherstufen des Sekundärkreises in einer Komponente eines Wärmetauschersystems des Primärkreises angeordnet sein können, so dass sich eine logische Bypass-Leitung im Sinne der Erfindung ergibt. Zum Beispiel können die Dampfüberhitzungsstufe und eine Zwischenüberhitzungsstufe parallel durch heißes Wärmeträgermedium in einem solchen Wärmetauschersystem erwärmt werden, indem beide parallel von einem Strom aus heißem Wärmeträgermedium umströmt bzw. überströmt werden, obwohl der Wärmeträgermedium-Strom nicht in zwei separaten Rohrleitungssystemen getrennt geführt wird. In diesem Fall ergibt sich eine Art logischer Bypass, in dem ein erster Teil des Wärmeträgermedium-Stroms für die Wärmeübertragung an die Dampferzeugungsstufe und ein zweiter Teil für die Wärmeübertragung an die Zwischenüberhitzungsstufe verwendet werden. Optional können Wärmetauscherstufen mit niedrigerer Temperatur in der gleichen Komponente diesem Strom nachgelagert angeordnet sein.

Außerdem kann zusätzlich im Primärkreis und/oder Sekundärkreis ein thermischer Zwischenspeicher 7 eingebaut sein, der im Überleistungsbetrieb thermische Energie zwischenspeichert, die im Unterleistungsbetrieb wieder in den Sekundärkreislauf eingebracht werden kann. Auch kann lediglich ein Speicher 8 bzw. 9 für das Wärmeträgermedium vor oder nach der solarthermischen Baugruppe 5 ausgeführt werden oder sie können auch ganz weggelassen werden.

## Patentansprüche

1. Solarthermisches Kraftwerk mit indirekter Verdampfung, umfassend zumindest folgende Komponenten:
- einen Primärkreis (1) mit einem Wärmeträgermedium-Leitungssystem, das mindestens eine solarthermische Baugruppe (5) zur Erhitzung des Wärmeträgermediums mittels Solarenergie umfasst,
- einen Wasserdampf-Sekundärkreis (2) mit zumindest:
- einer Vorwärmstufe (11) zum Vorwärmen von Speisewasser,
- einer der Vorwärmstufe (11) nachgeschalteten Dampferzeugungsstufe (12) zur Erzeugung von Dampf,
- einer der Dampferzeugungsstufe (12) nachgeschalteten Dampfüberhitzungsstufe (13) zur Überhitzung des Dampfes,
- einem über ein Dampfleitungssystem (18) mit einem Ausgang der Dampfüberhitzungsstufe (13) verbundenen Dampfturbinensystem (21, 22, 23), welches im Betrieb mit dem überhitzten Dampf gespeist wird,
- einem dem Dampfturbinensystem (21, 22, 23) abdampfseitig nachgeschalteten Kondensatorsystem (20) zur Kondensierung des Dampfes, und
- einem Wasserleitungssystem (19) mit einem zwischen dem Kondensatorsystem (20) und der Vorwärmstufe (11) angeordneten Speisewassertank (40), und
- einen Generator (3), der direkt oder indirekt mit dem Dampfturbinensystem (21, 22, 23) gekoppelt ist,
wobei der Primärkreis (1) eine Wärmetauschergruppe mit einem Wärmeträgermedium-Leitungssystem zur Übertragung der Wärmeenergie vom Wärmeträgermedium des Primärkreises (1) auf die Dampfüberhitzungsstufe (13), die Dampferzeugungsstufe (12) und die Vorwärmstufe (11) des Wasserdampf-Sekundärkreises (2) umfasst, **dadurch gekennzeichnet, dass** des Wärmeträgermedium-Leitungssystem mindestens eine Bypass-Leitung (B1, B2, B3) um die Dampfüberhitzungsstufe (13) und/oder die Dampferzeugungsstufe (12) aufweist, die vor der Vorwärmstufe (11) wieder in den Hauptmassenstrom des Wärmeträgermedium-Leitungssystems eingeleitet wird.

2. Solarthermisches Kraftwerk nach Anspruch 1, **dadurch gekennzeichnet, dass** in der Bypass-Leitung um die Dampfüberhitzungsstufe (13) eine zusätzliche Dampfüberhitzungsstufe (15) und/oder die Dampferzeugungsstufe (12) angeordnet ist.

3. Solarthermisches Kraftwerk nach Anspruch 1 oder 2, **dadurch gekennzeichnet, dass** in der Bypass-Leitung um die Dampferzeugungsstufe (12) eine zusätzliche Dampfüberhitzungsstufe (15) angeordnet ist.

4. Solarthermisches Kraftwerk nach einem der vorhergehenden Ansprüche, **dadurch gekennzeichnet, dass** das Wärmeträgermedium-Leitungssystem eine Leitung um die Vorwärmstufe (11) herum aufweist, in der optional eine zusätzliche Dampfüberhitzungsstufe (15) angeordnet ist.

5. Solarthermisches Kraftwerk nach einem der vorhergehenden Ansprüche, **dadurch gekennzeichnet, dass** das Wärmeträgermedium-Leitungssystem eine zusätzliche Leitung aufweist, welche um die Dampfüberhitzungsstufe (13) und die Dampferzeugungsstufe (12) herumläuft, in der optional eine zusätzliche Dampfüberhitzungsstufe (15) angeordnet ist.

6. Solarthermisches Kraftwerk nach einem der Ansprüche 2 bis 5, **dadurch gekennzeichnet, dass** die zusätzliche Dampfüberhitzungsstufe zumindest zwei Zwischenüberhitzungsstufen (16, 17) umfasst, die jeweils optional mehrere Zwischenüberhitzungsvorrichtungen (31, 32, 33, 34, 35, 36) umfassen.

7. Solarthermisches Kraftwerk nach einem der vorhergehenden Ansprüche, das einen thermischen Zwischenspeicher (7) im Primärkreis (1) und/oder Sekundärkreis(2) aufweist.

8. Solarthermisches Kraftwerk nach einem der vorhergehenden Ansprüche, **dadurch gekennzeichnet, dass** im Primärkreis (1) ein oder mehrere Speichertanks (8, 9) für das Wärmeträgermedium stromauf- und/oder stromabwärts der solarthermischen Baugruppe (5) angeordnet sind.

9. Solarthermisches Kraftwerk nach einem der vorhergehenden Ansprüche, **dadurch gekennzeichnet, dass** die solarthermische Baugruppe (5) ein oder mehrere oder ein Feld von Sonnenkollektoren umfasst.

10. Verfahren zum Betrieb eines solarthermischen Kraftwerks mit indirekter Verdampfung, wobei:
- in einem Primärkreis (1) ein Wärmeträgermedium mittels einer solarthermischen Baugruppe (5) mittels Solarenergie erwärmt wird und das erwärmte Wärmeträgermedium in eine Wärmetauschergruppe zur Übertragung der Wärmeenergie vom Wärmeträgermedium auf einen Sekundärkreis (2) geleitet wird, bevor es abgekühlt wieder in die solarthermische Baugruppe (5) eingespeist wird,
- in einem Wasserdampf-Sekundärkreis (2) Speisewasser aus einem Speisewassertank (40) in der Wärmetauschergruppe zuerst in einer Vorwärmstufe (11) vorgewärmt , in einer der Vorwärmstufe (11) nachgeschalteten Dampferzeugungsstufe (12) Dampf erzeugt und in einer der Dampferzeugungsstufe (12) nachgeschalteten Dampfüberhitzungsstufe (13) der Dampf überhitzt wird, bevor mit dem überhitzten Dampf über ein Dampfleitungssystem (18) ein Dampfturbinensystem (21, 22, 23) gespeist wird, das direkt oder indirekt mit einem Generator (3) gekoppelt ist, und wobei anschließend der aus dem Dampfturbinensystem (21, 22, 23) austretende Dampf in einem Kondensatorsystem (20) zu Wasser kondensiert und zu dem Speisewassertank (40) zurückgeleitet wird,
**dadurch gekennzeichnet,**
**dass** ein Teilstrom des Wärmeträgermediums des Primärkreises (1) in der Wärmetauschergruppe über mindestens eine Bypass-Leitung um die Dampfüberhitzungsstufe (13) und/oder die Dampferzeugungsstufe (12) des Sekundärkreises (2) geleitet und vor der Vorwärmstufe (11) wieder in den Hauptmassenstrom eingespeist wird.

11. Verfahren zum Betrieb eines solarthermischen Kraftwerks nach Anspruch 10, **dadurch gekennzeichnet, dass** ein Teilstrom des Wärmeträgermediums in der Bypass-Leitung um die Dampfüberhitzungsstufe (13) durch eine zusätzliche Dampfüberhitzungsstufe (15) und/oder die Dampferzeugungsstufe (12) geleitet wird.

12. Verfahren zum Betrieb eines solarthermischen Kraftwerks nach Anspruch 10 oder 11, **dadurch gekennzeichnet, dass** ein Teilstrom des Wärmeträgermediums in der Bypass-Leitung um die Dampferzeugungsstufe (12) durch eine zusätzliche Dampfüberhitzungsstufe (15) geleitet wird.

13. Verfahren zum Betrieb eines solarthermischen Kraftwerks nach einem der Ansprüche 10 bis 12, **dadurch gekennzeichnet, dass** ein Teilstrom des Wärmeträgermediums in einer Leitung um die Vorwärmstufe (11) herum geleitet wird, in der optional eine zusätzliche Dampfüberhitzungsstufe (15) angeordnet ist.

14. Verfahren zum Betrieb eines solarthermischen Kraftwerks nach einem der Ansprüche 10 bis 13, **dadurch gekennzeichnet, dass** zusätzlich ein Teilstrom des Wärmeträgermediums in einer Bypassleitung um die Dampfüberhitzungsstufe (13) und die Dampferzeugungsstufe (12) herum geleitet und vor der Vorwärmstufe wieder in den Hauptmassenstrom eingespeist wird, in der optional eine zusätzliche Dampfüberhitzungsstufe (15) angeordnet ist.

15. Verfahren zum Betrieb eines solarthermischen Kraftwerks nach einem der Ansprüche 11 bis 14, **dadurch gekennzeichnet, dass** die zusätzliche Dampfüberhitzungsstufe (15) zur Zwischenüberhitzung des aus einer Dampfturbine des Dampfturbinensystems (21, 22, 23) austretenden Dampfes in einer ersten oder zweiten Zwischenüberhitzungsstufe (16, 17) genutzt wird, bevor es in eine weitere Dampfturbine geleitet wird.

## Claims

1. Solar thermal power plant using indirect evaporation, comprising at least the following components:
- a primary circuit (1) having a heat transfer medium conduction system, comprising at least one solar thermal subassembly (5) for heating the heat transfer medium by means of solar energy,
- a steam secondary circuit (2) having at least:
- a preheating stage (11) to preheat feedwater,
- a steam generation stage (12) downstream from the preheating stage (11) to generate steam,
- a steam superheating stage (13) downstream from the steam generation stage (12) to superheat the steam,
- a steam turbine system (21, 22, 23) linked to an outlet of the steam superheating stage (13) via a steam conduction system (18), which is fed when operational with the superheated steam,
- a condensing system (20) installed downstream from the steam turbine system (21, 22, 23) on the exhaust steam side to condense the steam, and
- a water conduction system (19) having a feedwater tank (40) located between the condensing system (20) and the preheating stage (11), and
- a generator (3), which is coupled directly or indirectly to the steam turbine system (21, 22, 23),
wherein the primary circuit (1) comprises a heat exchanger group having a heat transfer medium conduction system to transfer the heat energy from the heat transfer medium of the primary circuit (1) to the steam superheating stage (13), the steam generation stage (12) and the preheating stage (11) of the steam secondary circuit (2), **characterised in that** the heat transfer medium conduction system has at least one bypass conduction path (B1, B2, B3) around the steam superheating stage (13) and/or the steam generation stage (12), which is fed back into the main mass flow of the heat transfer medium conduction system before the preheating stage (11).

2. Solar thermal power plant according to claim 1, **characterised in that** an additional steam superheating stage (15) and/or the steam generation stage (12) is located in the bypass conduction path around the steam superheating stage (13).

3. Solar thermal power plant according to claim 1 or 2, **characterised in that** an additional steam superheating stage (15) is located in the bypass conduction path around the steam generation stage (12).

4. Solar thermal power plant according to one of the preceding claims, **characterised in that** the heat transfer medium conduction system has a conduction path around the preheating stage (11), wherein an additional steam superheating stage (15) is optionally located.

5. Solar thermal power plant according to one of the preceding claims, **characterised in that** the heat transfer medium conduction system has an additional conduction path which circumvents the steam superheating stage (13) and the steam generation stage (12), wherein an additional steam superheating stage (15) is optionally located.

6. Solar thermal power plant according to one of claims 2 to 5, **characterised in that** the additional steam superheating stage comprises at least two resuperheating stages (16, 17), which each optionally comprise several resuperheating devices (31, 32, 33, 34, 35, 36).

7. Solar thermal power plant according to one of the preceding claims, having a thermal storage tank (7) in the primary circuit (1) and/or the secondary circuit (2).

8. Solar thermal power plant according to one of the preceding claims, **characterised in that** one or more storage tanks (8, 9) for the heat transfer medium are located in the primary circuit (1) upstream and/or downstream from the solar thermal subassembly (5).

9. Solar thermal power plant according to one of the preceding claims, **characterised in that** the solar thermal subassembly (5) comprises one or more or an array of solar collectors.

10. Method for operating a solar thermal power plant using indirect evaporation, wherein:
- a heat transfer medium is heated in a primary circuit (1) by means of a solar thermal subassembly (5) by means of solar energy, and the heated heat transfer medium is conducted into a heat exchanger group to transfer heat energy from the heat transfer medium to a secondary circuit (2), before it is fed back into the solar thermal subassembly (5) after cooling,
- in a steam secondary circuit (2), feedwater from a feedwater tank (40) is first preheated in the heat exchanger group in a preheating stage (11), steam is generated in a steam generation stage (12) downstream from the preheating stage (11) and the steam is superheated in a steam superheating stage (13) downstream from the steam generation stage (12), before the superheated steam is fed into a steam turbine system (21, 22, 23) via a steam conduction system (18), which is coupled directly or indirectly to a generator (3) and wherein finally the steam discharged from the steam turbine system (21, 22, 23) is condensed into water in a condensing system (20) and fed back to the feedwater tank (40), **characterised in that**,
a partial flow of the heat transfer medium of the primary circuit (1) is conducted around the steam superheating stage (13) and/or the steam generation stage (12) of the secondary circuit (2) via at least one bypass conduction path and is fed back into the main mass flow before the preheating stage (11).

11. Method for operating a solar thermal power plant according to claim 10, **characterised in that** a partial flow of the heat transfer medium is conducted around the steam superheating stage (13) through an additional steam superheating stage (15) and/or the steam generation stage (12) in the bypass conduction path.

12. Method for operating a solar thermal power plant according to claim 10 or 11, **characterised in that** a partial flow of the heat transfer medium is conducted around the steam generation stage (12) through an additional steam superheating stage (15) in the bypass conduction path.

13. Method for operating a solar thermal power plant according to one of claims 10 to 12, **characterised in that** a partial flow of the heat transfer medium is conducted around the preheating stage (11) in a conduction path, wherein an additional steam superheating stage (15) is optionally located.

14. Method for operating a solar thermal power plant according to one of claims 10 to 13, **characterised in that** a partial flow of the heat transfer medium is additionally conducted around the steam superheating stage (13) and the steam generation stage (12) in a bypass conduction path, and is fed back into the main mass flow before the preheating stage, wherein an additional steam superheating stage (15) is optionally located.

15. Method for operating a solar thermal power plant according to one of claims 11 to 14, **characterised in that** the additional steam superheating stage (15) is used in a first or second resuperheating stage (16, 17) to resuperheat the steam discharged from a steam turbine of the steam turbine system (21, 22, 23), before it is conducted into a further steam turbine.

## Revendications

1. Centrale solaire thermique à évaporation indirecte, comprenant au moins les composants suivants :
- un circuit primaire (1), avec un système de conduite de fluide caloporteur incluant au moins un module solaire thermique (5) pour chauffer le fluide caloporteur au moyen d'énergie solaire,
- un circuit secondaire de vapeur d'eau (2), avec au moins :
- un étage préchauffeur (11) pour préchauffer l'eau d'alimentation,
- un étage producteur de vapeur (12) monté en aval de l'étage préchauffeur (11), pour produire de la vapeur,
- un étage surchauffeur de vapeur (13) monté en aval de l'étage producteur de vapeur (12), pour surchauffer la vapeur,
- un système de turbines à vapeur (21, 22, 23) qui est relié par un système de conduite de vapeur (18) à une sortie de l'étage surchauffeur de vapeur (13) et qui, lorsqu'il est en fonctionnement, est alimenté en vapeur surchauffé,
- un système de condenseur (20) monté en aval du système de turbines à vapeur (21, 22, 23) côté échappement, pour condenser la vapeur, et
- un système de conduite d'eau (19) avec un réservoir d'eau d'alimentation (40) disposé entre le système de condenseur (20) et l'étage préchauffeur (11), et
- un générateur (3) couplé de manière directe ou indirecte au système de turbines à vapeur (21, 22, 23),
le circuit primaire (1) comprenant un groupe échangeur de chaleur avec un système de conduite de fluide caloporteur pour transférer l'énergie thermique du fluide caloporteur du circuit primaire (1) vers l'étage surchauffeur de vapeur (13), l'étage producteur de vapeur (12) et l'étage préchauffeur (11) du circuit secondaire de vapeur d'eau (2), **caractérisée en ce que** le système de conduite de fluide caloporteur comporte au moins une conduite de dérivation (B1, B2, B3) autour de l'étage surchauffeur de vapeur (13) et/ou de l'étage producteur de vapeur (12), qui est réintroduite avant l'étage préchauffeur (11) dans le flux massique principal du système de conduite de fluide caloporteur.

2. Centrale solaire thermique selon la revendication 1, **caractérisée en ce que** dans la conduite de dérivation autour de l'étage surchauffeur de vapeur (13), est disposé un étage surchauffeur de vapeur supplémentaire (15) et/ou l'étage producteur de vapeur (12).

3. Centrale solaire thermique selon la revendication 1 ou 2, **caractérisée en ce que** dans la conduite de dérivation autour de l'étage producteur de vapeur (12), est disposé un étage surchauffeur de vapeur supplémentaire (15).

4. Centrale solaire thermique selon l'une des revendications précédentes, **caractérisée en ce que** le système de conduite de fluide caloporteur comporte une conduite autour de l'étage préchauffeur (11), dans laquelle est disposé optionnellement un étage surchauffeur de vapeur supplémentaire (15).

5. Centrale solaire thermique selon l'une des revendications précédentes, **caractérisée en ce que** le système de conduite de fluide caloporteur comporte une conduite supplémentaire autour de l'étage surchauffeur de vapeur (13) et de l'étage producteur de vapeur (12), dans laquelle est disposée optionnellement un étage surchauffeur de vapeur supplémentaire (15).

6. Centrale solaire thermique selon l'une des revendications 2 à 5, **caractérisée en ce que** ledit étage surchauffeur de vapeur supplémentaire comprend au moins deux étages surchauffeurs intermédiaires (16, 17), qui comprennent chacun optionnellement plusieurs dispositifs surchauffeurs intermédiaires (31, 32, 33, 34, 35, 36).

7. Centrale solaire thermique selon l'une des revendications précédentes, qui comporte un accumulateur thermique intermédiaire (7) dans le circuit primaire (1) et/ou le circuit secondaire (2).

8. Centrale solaire thermique selon l'une des revendications précédentes, **caractérisée en ce que** dans le circuit primaire (1), en amont et/ou en aval du groupe solaire thermique (5), sont disposés un ou plusieurs réservoirs de stockage (8, 9) pour le fluide caloporteur.

9. Centrale solaire thermique selon l'une des revendications précédentes, **caractérisée en ce que** le groupe solaire thermique (5) comprend un ou plusieurs capteurs solaires ou un champ de capteurs solaires.

10. Procédé de fonctionnement d'une centrale solaire thermique à évaporation indirecte, selon lequel :
- dans un circuit primaire (1), un fluide caloporteur est chauffé par énergie solaire au moyen d'un groupe solaire thermique (5), et le fluide caloporteur chauffé est conduit dans un groupe échangeur de chaleur pour transférer l'énergie thermique du fluide caloporteur vers un circuit secondaire (2), avant de le réintroduire, à l'état refroidi, dans le groupe solaire thermique (5),
- dans un circuit secondaire à vapeur d'eau (2), de l'eau d'alimentation provenant d'un réservoir d'eau d'alimentation (40) est d'abord préchauffée dans le groupe échangeur de chaleur dans un étage préchauffeur (11), de la vapeur est produite dans un étage producteur de vapeur (12) monté en aval de l'étage préchauffeur (11) et cette vapeur est surchauffée dans un étage surchauffeur de vapeur (13) monté en aval de l'étage producteur de vapeur (12) avant d'alimenter en vapeur surchauffée, au moyen d'un système de conduite de vapeur (18), un système de turbines de vapeur (21, 22, 23) couplé de manière directe ou indirecte à un générateur (3), après quoi la vapeur sortant du système de turbines à vapeur (21, 22, 23) est condensée en eau dans un système de condenseur (20) et reconduite vers le réservoir d'eau d'alimentation (40),
**caractérisé en ce que**
un flux partiel du fluide caloporteur du circuit primaire (1) est conduit dans le groupe échangeur de chaleur par au moins une conduite de dérivation autour de l'étage surchauffeur de vapeur (13) et/ou l'étage producteur de vapeur (12) et est réintroduit dans le flux massique principal avant l'étage préchauffeur (11).

11. Procédé de fonctionnement d'une centrale solaire thermique selon la revendication 10, **caractérisé en ce qu'**un flux partiel du fluide caloporteur est conduit dans la conduite de dérivation autour de l'étage surchauffeur de vapeur (13) à travers un étage surchauffeur de vapeur supplémentaire (15) et/ou l'étage producteur de vapeur (12).

12. Procédé de fonctionnement d'une centrale solaire thermique selon la revendication 10 ou 11, **caractérisé en ce qu'**un flux partiel du fluide caloporteur est conduit dans la conduite de dérivation autour de l'étage producteur de vapeur (12) à travers un étage surchauffeur de vapeur supplémentaire (15).

13. Procédé de fonctionnement d'une centrale solaire thermique selon l'une des revendications 10 à 12, **caractérisé en ce qu'**un flux partiel du fluide caloporteur est conduit dans une conduite autour de l'étage préchauffeur (11), conduite dans laquelle est disposé optionnellement un étage surchauffeur de vapeur supplémentaire (15).

14. Procédé de fonctionnement d'une centrale solaire thermique selon l'une des revendications 10 à 13, **caractérisé en ce que**, en outre, un flux partiel du fluide caloporteur est conduit dans une conduite de dérivation autour de l'étage surchauffeur de vapeur (13) et de l'étage producteur de vapeur (12) et est réintroduit dans le flux massique principal avant l'étage préchauffeur, conduite dans laquelle est disposé optionnellement un étage surchauffeur de vapeur supplémentaire (15).

15. Procédé de fonctionnement d'une centrale solaire thermique selon l'une des revendications 11 à 14, **caractérisé en ce que** l'étage surchauffeur de vapeur supplémentaire (15) est utilisé pour la surchauffe intermédiaire de la vapeur sortant d'une turbine à vapeur du système de turbines à vapeur (21, 22, 23) dans un premier ou second étage surchauffeur intermédiaire (16, 17), avant de la conduire dans une autre turbine à vapeur.
